# EUROPEAN PATENT SPECIFICATION

(11) **EP 3 765 185 B1**
(45) Date of publication and mention of the grant of the patent: **19.07.2023**
(21) Application number: 19711864.9
(22) Date of filing: 13.03.2019
(51) Int. Cl.: B01J 13/14

(54) **MICROENCAPSULATION USING AMINO SUGAR OLIGOMERS**
MIKROVERKAPSELUNG UNTER VERWENDUNG VON AMINOZUCKEROLIGOMEREN
MICROENCAPSULATION UTILISANT DES OLIGOMÈRES DE SUCRE AMINÉ

(30) Priority: 13.03.2018 EP 18161589
(43) Date of publication of application: 20.01.2021
(73) Proprietor: Novozymes A/S, 2880 Bagsvaerd (DK)
(72) Inventor: ANDERSEN, Casper, Orsoe, 2880 Bagsvaerd (DK); SIMONSEN, Ole, 2880 Bagsvaerd (DK); ANDERSEN, Kim, Bruno, 2880 Bagsvaerd (DK); HOBEL, Cédric, 2880 Bagsvaerd (DK)
(74) Representative: NZ EPO Representatives
(86) International application number: PCT/EP2019/056281
(87) International publication number: WO 2019/175240

(56) References cited:
- WO-A1-2004/041251
- WO-A1-2014/177709
- DATABASE WPI Week 201701 Thomson Scientific, London, GB; AN 2016-66256C XP002784570, & CN 106 011 024 A (GUANGZHOU DANQI DAILY CHEM CO LTD) 12 October 2016 (2016-10-12)
- DATABASE WPI Week 200903 Thomson Scientific, London, GB; AN 2009-A43808 XP002784571, & CN 101 167 706 A (UNIV DONGNAN) 30 April 2008 (2008-04-30)

## Description

### FIELD OF THE INVENTION

The invention relates to microcapsules made from chitosan oligomers, which are used for stabilization of detergent enzymes.

### BACKGROUND

It is known to be desirable to protect enzymes and components having compatibility problems with other components in liquid detergent concentrates. There have been many proposals in the literature to protect the enzyme from the continuous phase of the concentrate and/or water by providing a continuous shell and/or a matrix which is intended to protect the enzyme from the concentrate but to release it when the detergent concentrate is added to water to provide wash water. Examples are given in EP 356,239 and WO 92/20771, and the prior art discussed in those. These, and other known methods, generally involve forming the shell by coacervation.

Unfortunately, it is very difficult to select a coacervation polymer and its conditions of use on the one hand, and a polymeric or other core composition on the other, so as to obtain in particles of high specific area the optimum protection and release performance that is required. In general, either the shell is too impermeable to give effective release when required or the shell permits premature release.

Various encapsulation techniques other than coacervation are known for various purposes and one such technique which has been used for other processes is interfacial condensation (IFC) polymerization. IFC encapsulation techniques are generally conducted in oil-in-water dispersions (so that the oil phase becomes the core) but it is also known to conduct IFC encapsulation on a water-in-oil dispersion (so that the water phase becomes the core).

Grunwald et al. "Nylon polyethyleneimine microcapsules for immobilizing multienzymes with soluble dextran-NAD+ for the continuous recycling of the microencapsulated dextran-NAD+", Biochem and Biophys Res Comm, vol. 81, 2 (1978), pp. 565-570, discloses preparation of semipermeable nylon polyethyleneimine microcapsules containing a multi-enzyme system of yeast alcohol dehydrogenase (EC 1.1.1.1) and malic dehydrogenase (EC 1.1.1.37) together with a soluble immobilized coenzyme, dextran-NAD+.

Poncelet et al. "Microencapsulation within crosslinked polyethyleneimine membranes", J. Microencapsulation, vol. 11, 1 (1994), pp. 31-40, discloses a microencapsulation technique involving formation of a PEI membrane, which is particularly suited for immobilization of biocatalysts.

WO 97/24177 describes a liquid detergent concentrate with enzyme containing particles. The particles have a polymer shell formed from a condensation polymer, and contain a core polymer which causes stretching of the polymer shell upon dilution of the detergent concentrate in water. Encapsulated precipitated enzymes are also disclosed.

JP-A-63-137996 describes liquid detergents containing encapsulated materials wherein the encapsulation can be by coacervation or by IFC polymerization. The objective in JP 63-137996 is to include in the core a water-soluble or water absorbent polymer that will swell sufficiently when the detergent is put into wash water to cause rupture of the capsules, with consequential release of the core.

WO 2004/041251 discloses single-core and multi-core microcapsules having multiple shells, at least one of which is formed of a complex coacervate of two components of shell materials.

WO 2014/177709 discloses enzyme containing microcapsules produced by crosslinking of a polybranched polyamine, such as polyethyleneimine.

We have found that it is not possible to achieve the desired result using any of the microencapsulation procedures previously described for encapsulating enzymes and components having compatibility problems with other components in liquid detergent concentrates. In practice, either the membrane is generally too permeable to prevent migration of the relatively low molecular weight enzyme through the high specific surface area provided by the membrane, or the membrane is so impermeable and strong that it cannot reliably release the enzyme when the concentrate is added to wash water. The processes are not capable of easy reproducible operation to give the desired combination of properties.

The prior art references have failed to acknowledge the usefulness of microcapsules made from natural polymers, such as amino sugar oligomers, for improving the storage stability of enzymes and other components in detergents, while at the same time being capable of delivering the content of the microcapsule timely in a detergent application.

### SUMMARY

In a first aspect, the present invention provides a microcapsule composition (a plurality of microcapsules), comprising a detergent enzyme entrapped in an aqueous compartment formed by a membrane, which membrane surrounds the compartment and is made by cross-linking of chitosan oligomers having a weight average molecular weight (Mw) of 300 to 15000 Daltons; wherein the detergent enzyme is selected from the group consisting of protease, metalloprotease, subtilisin, amylase, lipase, cutinase, cellulase, mannanase, pectinase, xanthanase, DNase, laccase, peroxidase, haloperoxidase, perhydrolase, and combinations thereof; preferably the enzyme is a lipase.

In a second aspect, the invention provides a liquid detergent composition or a water-soluble unit dose article surrounded by a water-soluble film, comprising an anionic or non-ionic surfactant, and/or a detergent builder, and the microcapsule composition of the invention

The disclosure also provides methods for preparing the compositions of the invention. The invention also provides the use of the compositions of the invention for stabilizing an enzyme in a liquid detergent composition.

Other aspects and embodiments of the disclosure are apparent from the description and examples.

### DETAILED DESCRIPTION

The inventors of the present invention have found that microcapsules with a membrane made by cross-linking of chitosan oligomers, are particularly useful for encapsulating and stabilizing detergent enzymes in liquid detergent compositions, such as laundry or (automatic) dish wash detergents.

We have found that the membrane of the microcapsule is capable of improving the storage stability of the encapsulated enzyme(s) in a liquid detergent composition (as compared to a non-encapsulated enzyme), as demonstrated in Example 1. The membrane formed by crosslinking the chitosan oligomers is capable of separating an enzyme or another compound from, *e*.*g*., (anionic) surfactants, or other detergent components causing incompatibility problems, in the detergent.

A critically important parameter when using encapsulated enzymes in detergents is the ability to release the enzyme immediately upon dilution of the detergent in water, as for example in a laundry or dish wash application. The microcapsules of the present invention have excellent properties in this regard, and are capable of quickly releasing the entire encapsulated enzyme.

The microcapsules, as described in the present invention, do not require the presence of a core polymer to be capable of releasing the enzyme, upon dilution in water. Further, the invention does not require the enzyme to be in a precipitated form in the core of the microcapsule, in order to control premature release, as described in WO 97/24177.

We have found, that encapsulating enzymes in a microcapsule with a semipermeable membrane of the invention, and having a water activity inside these capsules (prior to addition to the liquid detergent) higher than in the liquid detergent, the capsules will undergo a (partly) collapse when added to the detergent (water is oozing out), thus leaving a more concentrated and more viscous enzyme containing interior in the capsules. The collapse of the membrane may also result in a reduced permeability. This can be further utilized by addition of stabilizers/polymers, especially ones that are not permeable through the membrane. The collapse and resulting increase in viscosity will reduce/hinder the diffusion of hostile components (*e*.*g*., surfactants or sequestrants) into the capsules, and thus increase the storage stability of the enzyme in the liquid detergent. Components in the liquid detergent that are sensitive to the enzyme (*e*.*g*., components that act as substrate for the enzyme) are also protected against degradation by the enzyme. During wash the liquid detergent is diluted by water, thus increasing the water activity. Water will now diffuse into the capsules (osmosis). The capsules will swell and the membrane will either become permeable to the enzyme so they can leave the capsules, or simply burst and in this way releasing the enzyme.

The concept is very efficient in stabilizing enzymes against hostile components in liquid detergents, and vice versa also protects enzyme sensitive/labile components in liquid detergents from enzymes.

Components which are labile to enzyme degradation are increasingly used in detergents due to the, in many cases, high biodegradability of such components.

Cellulases may degrade celluloses and cellulose salts such as carboxymethyl cellulose CMC (and Na-CMC) or microcrystalline cellulose used, *e*.*g*., for anti-redeposition of soil, as rheology modifiers and builders.

Amylases may degrade starch and starch derivatives such as e.g. starch based surfactants or carboxylated starch used as builder. Starches can also be used as rheology modifiers or fillers.

Proteases may degrade peptides/proteins or components with peptide/amide bonds, *e*.*g*., peptides with detergent properties ("peptergents").

Lipases may degrade components with ester bonds such as lipids, *e*.*g*., some types of lipid based or polyester soil release polymers, lipid based surfactants, lipid based structurants or rheology modifiers (like di- and triglyceride structurants, *e*.*g*., hydrogenated castor oil and derivatives) and perfumes with ester bonds *etc.*

Mannanase and Xanthanase may degrade mannan and xanthan type components, like guar gum and xanthan gum, which are used as rheology modifier in detergents.

Pectinases (pectin lyases or pectate lyases) may degrade pectins and pectates (pectic polysaccharides), which can be used, e.g., as rheology modifiers in detergent.

Chitosanase may degrade chitosan, and xylanases may degrade xylans and xylan surfactants.

Addition of the microcapsules to detergents can be used to influence the visual appearance of the detergent product, such as an opacifying effect (small microcapsules) or an effect of distinctly visible particles (large microcapsules). The microcapsules may also be colored.

The microcapsules can be used to reduce the enzyme dust levels during handling and processing of enzyme products.

Unless otherwise indicated, or if it is apparent from the context that something else is meant, all percentages are indicated as percent by weight (% w/w) throughout the application.

Unless otherwise indicated, the particle size is the volume based particle diameter (and the average particle size is the volume average particle diameter), which is the same as the weight based particle diameter if the densities of the particles are the same.

### Microcapsules

The microcapsules of the invention are typically produced by forming water droplets into a continuum that is non-miscible with water - *i.e.,* typically by preparing a water-in-oil emulsion - and subsequently formation of the membrane by interfacial polymerization via addition of a cross-linking agent. After eventual curing the capsules can be harvested and further rinsed and formulated by methods known in the art. The capsule formulation is subsequently added to the detergent.

The payload, the major membrane constituents and eventual additional component that are to be encapsulated are found in the water phase. In the continuum is found components that stabilize the water droplets towards coalescence (emulsifiers, emulsion stabilizers, surfactants etc.) and the cross linking agent is also added via the continuum.

The emulsion can be prepared be any methods known in the art, *e*.*g*., by mechanical agitation, dripping processes, membrane emulsification, microfluidics, sonication etc. In some cases simple mixing of the phases automatically will result in an emulsion, often referred to as self-emulsification. Use of methods resulting in a narrow size distribution is an advantage.

The cross-linking agent(s) is typically subsequently added to the emulsion, either directly or more typically by preparing a solution of the crosslinking agent in a solvent which is soluble in the continuous phase. The emulsion and cross-linking agent, or solution thereof, can be mixed by conventional methods used in the art, *e*.*g*., by simple mixing or by carefully controlling the flows of the emulsion and the cross-linking agent solution through an in-line mixer.

In some cases curing of the capsules is needed to complete the membrane formation. Curing is often simple stirring of the capsules for some time to allow the interfacial polymerization reaction to end. In other cases the membrane formation can be stopped by addition of reaction quencher.

The capsules may be post modified, *e*.*g*., by reacting components onto the membrane to hinder or reduce flocculation of the particles in the detergent as described in WO 99/01534.

The produced capsules can be isolated or concentrated by methods known in the art, *e*.*g*., by filtration, centrifugation, distillation or decantation of the capsule dispersion.

The resulting capsules can be further formulated, *e*.*g*., by addition of surfactants to give the product the desired properties for storage, transport and later handling and addition to the detergent. Other microcapsule formulation agents include rheology modifiers, biocides (*e*.*g*., Benzisothiazolinone (Proxel)), acid/base for adjustment of pH (which will also adjust inside the microcapsules), and water for adjustment of water activity.

The capsule forming process may include the following steps:
- Preparation of the initial water and oil phase(s),
- Forming a water-in-oil emulsion,
- Membrane formation by interfacial polymerization,
- Optional post modification,
- Optional isolation and/or formulation,
- Optional storage,
- Addition to detergent.

The process can be either a batch process or a continuous or semi-continuous process.

A microcapsule according to the invention is a small aqueous sphere with a (uniform) membrane around it (a compartment formed by the membrane). The material inside the microcapsule (entrapped in the microcapsule) is referred to as the core, internal phase, or fill, whereas the membrane is sometimes called a shell, coating, or wall. The microcapsules of the invention have diameters between 0.5 µm and 2 millimeters. Preferably, the mean diameter of the microcapsules is in the range of 1 µm to 1000 µm, more preferably in the range of 5 µm to 500 µm, even more preferably in the range of 10 µm to 500 µm, even more preferably in the range of 25 µm to 500 µm, and most preferably in the range of 25 µm to 200 µm. Alternatively, the diameter of the microcapsules is in the range of 0.5 µm to 30 µm; or in the range of 1 µm to 25 µm. The diameter of the microcapsule is measured in the oil phase after polymerization is complete. The diameter of the capsule may change depending on the water activity of the surrounding chemical environment.

Microencapsulation of enzymes, as used in the present invention, may be carried out by interfacial polymerization, wherein the two reactants in a polymerization reaction meet at an interface and react rapidly. The basis of this method is a reaction of the chitosan oligomers with a compound, usually an acid halide, acting as a crosslinking agent. The chitosan oligomer is preferably substantially water-soluble (when in free base form). Under the right alkaline pH conditions (which ensures reactive free base form of substantially all amine groups of the amino sugar), thin flexible membranes form rapidly at the interface. One way of carrying out the polymerization is to use an aqueous solution of the enzyme and the chitosan oligomer, which are emulsified with a non-aqueous solvent (and an emulsifier), and a solution containing the acid derivative is added. An alkaline or neutral buffering agent may be present in the enzyme solution to neutralize the acid formed during the reaction. Polymer membranes form instantly at the interface of the emulsion droplets. The polymer membrane of the microcapsule is typically of a cationic nature, and thus bind/complex with compounds of an anionic nature.

The diameter of the microcapsules is determined by the size of the emulsion droplets, which is controlled, for example by the stirring rate, when capsules are produced by mechanical agitation.

### Emulsion

An emulsion is a temporary or permanent dispersion of one liquid phase within a second liquid phase. The second liquid is generally referred to as the continuous phase. Surfactants are commonly used to aid in the formation and stabilization of emulsions. Not all surfactants are equally suitable for stabilizing an emulsion. The type and amount of a surfactant needs to be selected for optimum emulsion utility, especially with regard to preparation and physical stability of the emulsion, and stability during dilution and further processing. Physical stability refers to maintaining an emulsion in a dispersion form. Processes such as coalescence, aggregation, adsorption to container walls, sedimentation and creaming, are forms of physical instability, and should be avoided. Examples of suitable surfactants are described in WO 97/24177, page 19-21; and in WO 99/01534.

Emulsions can be further classified as either simple emulsions, wherein the dispersed liquid phase is a simple homogeneous liquid, or a more complex emulsion, wherein the dispersed liquid phase is a heterogeneous combination of liquid or solid phases, such as a double emulsion or a multiple-emulsion. For example, a water-in-oil double emulsion or multiple emulsion may be formed wherein the water phase itself further contains an emulsified oil phase; this type of emulsion may be specified as an oil-in-water-in oil (o/w/o) emulsion. Alternatively, a water-in-oil emulsion may be formed wherein the water phase contains a dispersed solid phase often referred to as a suspension-emulsion. Other more complex emulsions can be described. Because of the inherent difficulty in describing such systems, the term emulsion is used to describe both simple and more complex emulsions without necessarily limiting the form of the emulsion or the type and number of phases present.

### Chitosan oligomers

The chitosan oligomers used in the invention are oligomers comprising amino sugar monomers (residues). Due to the sugar moiety, these oligomers are derived from bio sustainable sources. Contrary to polymers, oligomers are made of fewer monomer units. Some references suggest up to about 100 monomer units, but this may vary.

The amino sugars are a mixture of N-acetyl-glucosamine (2-acetamido-2-deoxy-b-D-glucopyranose) and glucosamine. The mixture may include at least 60% glucosamine, preferably at least 80% glucosamine, more preferably at least 90% glucosamine, and most preferably at least 95% glucosamine.

In a preferred embodiment, the amino sugar monomers are glucosamine. The oligomers comprise or consist of chitosan oligomers, such as those described in Tian et al., "Molecular weight dependence of structure and properties of chitosan oligomers", RSC Advances, 2015 (5), pp. 69445-69452.

The chitosan oligomers have a weight average molecular weight (M_{w}) of 300 to 15000 Daltons, preferably 300 to 10000 Daltons, more preferably 300 to 5000 Daltons, and most preferably 300-4000 Daltons (or 300-3820 Daltons). Similarly, the chitosan oligomers may each consist of an average of 2-100 monomers, preferably 2-50 monomers, more preferably 2-25 monomers.

The viscosity of the chitosan oligomers is an indirect measure of the molecular weight. Thus, the chitosan oligomers may exhibit a viscosity of equal to or less than 5 cP in an 1% w/w solution in 1% acetic acid solution.

Since cross-linking of the chitosan oligomers is carried out at alkaline conditions, where the amino groups are uncharged (free base form), it is an advantage that the chitosan oligomers are soluble in water at alkaline pH. Thus, a 1% w/w solution of the individual chitosan oligomeric molecules may be soluble at pH 9, preferably above pH 9, or at pH 11.

Combinations of chitosan oligomers and other reactive compounds may also be used for preparing the microcapsules according to the invention. For instance, such compounds may be small amines as used in e.g. WO 2015/144784.

### Chitosan

Chitosan is a linear amino sugar oligomer composed of randomly distributed β-(1→4)-linked D-glucosamine (deacetylated unit) and N-acetyl-D-glucosamine (acetylated unit). Chitosan is produced commercially by deacetylation of chitin, which is the structural element in the exoskeleton of crustaceans and insects and in the cell walls of fungi. The degree of deacetylation (percentage of D-glucosamine) can be determined by NMR spectroscopy, and the degree of deacetylation in commercial chitosans ranges from 60 to 100%. A common method for the production of chitosan is the deacetylation of chitin using sodium hydroxide in excess as a reagent and water as a solvent.

A chitosan oligomer according to the invention is a linear polysaccharide composed of 2 to 100 randomly distributed β(1→4)-linked D-glucosamine (deacetylated unit) and N-acetyl-D-glucosamine (acetylated unit) monomers. The degree of deacetylation is at least 60%. Chitosan oligomers used in the invention may be soluble in an alkaline aqueous solutions at pH 9, preferably above pH 9, or at pH 11.

Chitosan oligomers may be produced by enzymatic degradation of chitosan polymers with chitosanase (EC 3.2.1.132), which catalyzes the endohydrolysis of beta-(1→4)-linkages between two D-glucosamine residues in a partially acetylated chitosan. Other enzymes such as chitinases (EC 3.2.1.132) may also sometimes catalyze the hydrolysis of chitosan into oligomers. Chitosan depolymerization into oligomers may also be carried out by incubating chitosan in strong acid solutions such as hydrochloric acid or nitrous acid. Tian *et al* also described the use of hydrogen peroxide as a depolymerization agent.

### Crosslinking agent

The crosslinking agent as used in the present invention is a molecule with at least two groups/sites capable of reacting with the chitosan oligomers, preferably amine groups, to form covalent bonds.

The crosslinking agent is preferably oil soluble and can be in the form of an acid anhydride or an acid halide, which are both reactive derivatives of carboxylic acids. For example, the acid anhydride can be adipic, phthalic, maleic, succinic or fumaric anhydrides.

In a preferred embodiment, the crosslinking agent is an acid chloride. For example, the acid chloride can be adipoyl chloride, sebacoyl chloride, diglycolyl chloride, dodecanedioc acid chloride, phthaloyl chloride, terephthaloyl chloride, isophthaloyl chloride, or trimesoyl chloride; but preferably, the crosslinking agent is isophtaloyl chloride, terephthaloyl chloride, or trimesoyl chloride. Enzyme(s)

The microcapsule of the invention include one or more enzymes suitable for including in laundry or dishwash detergents (detergent enzymes), such as a protease (e.g., subtilisin or metalloprotease), lipase, cutinase, amylase, carbohydrase, cellulase, pectinase, mannanase, arabinase, galactanase, xanthanase (EC 4.2.2.12), xylanase, DNase, perhydrolase, oxidoreductase (*e*.*g*., laccase, peroxidase, peroxygenase and/or haloperoxidase). Preferred detergent enzymes are protease (*e*.*g*., subtilisin or metalloprotease), lipase, amylase, lyase, cellulase, pectinase, mannanase, DNase, perhydrolase, and oxidoreductases (*e*.*g*., laccase, peroxidase, peroxygenase and/or haloperoxidase); or combinations thereof. More preferred detergent enzymes are protease (*e*.*g*., subtilisin or metalloprotease), lipase, amylase, cellulase, pectinase, and mannanase; or combinations thereof.

The microcapsule of the invention comprises a detergent enzyme selected from the group consisting of protease, metalloprotease, subtilisin, amylase, lipase, cutinase, cellulase, mannanase, pectinase, xanthanase, DNase, laccase, peroxidase, haloperoxidase, perhydrolase and combinations thereof. The microcapsule may include more than 0.1% of active enzyme protein; preferably more than 0.25%, more preferably more than 0.5%, more preferably more than 1%, more preferably more than 2.5%, more preferably more than 5%, more preferably more than 7.5%, more preferably more than 10%, more preferably more than 12.5%, more preferably more than 15%, even more preferably more than 20%, and most preferably more than 25% of active enzyme protein.

Proteases: The proteases for use in the present invention are serine proteases, such as subtilisins, metalloproteases and/or trypsin-like proteases. Preferably, the proteases are subtilisins or metalloproteases; more preferably, the proteases are subtilisins.

A serine protease is an enzyme which catalyzes the hydrolysis of peptide bonds, and in which there is an essential serine residue at the active site (White, Handler and Smith, 1973 "Principles of Biochemistry," Fifth Edition, McGraw-Hill Book Company, NY, pp. 271-272). Subtilisins include, preferably consist of, the I-S1 and I-S2 sub-groups as defined by Siezen et al., Protein Engng. 4 (1991) 719-737; and Siezen et al., Protein Science 6 (1997) 501-523. Because of the highly conserved structure of the active site of serine proteases, the subtilisin according to the invention may be functionally equivalent to the proposed sub-group designated subtilase by Siezen *et al.* (supra).

The subtilisin may be of animal, vegetable or microbial origin, including chemically or genetically modified mutants (protein engineered variants), preferably an alkaline microbial subtilisin. Examples of subtilisins are those derived from *Bacillus, e.g.,* subtilisin Novo, subtilisin Carlsberg, subtilisin BPN', subtilisin 309, subtilisin 147 and subtilisin 168 (described in WO 89/06279) and Protease PD138 (WO 93/18140). Examples are described in WO 98/020115, WO 01/44452, WO 01/58275, WO 01/58276, WO 03/006602 and WO 04/099401. Examples of trypsin-like proteases are trypsin (e.g., of porcine or bovine origin) and the *Fusarium* protease described in WO 89/06270 and WO 94/25583. Other examples are the variants described in WO 92/19729, WO 88/08028, WO 98/20115, WO 98/20116, WO 98/34946, WO 2000/037599, WO 2011/036263, especially the variants with substitutions in one or more of the following positions: 27, 36, 57, 76, 87, 97, 101, 104, 120, 123, 167, 170, 194, 206, 218, 222, 224, 235, and 274.

The metalloprotease may be of animal, vegetable or microbial origin, including chemically or genetically modified mutants (protein engineered variants), preferably an alkaline microbial metalloprotease. Examples are described in WO 2007/044993, WO 2012/110562 and WO 2008/134343.

Examples of commercially available subtilisins include Kannase^{™}, Everlase^{™}, Relase^{™}, Esperase^{™}, Alcalase^{™}, Durazym^{™}, Savinase^{™}, Ovozyme^{™}, Liquanase^{™}, Coronase^{™}, Polarzyme^{™}, Pyrase^{™}, Pancreatic Trypsin NOVO (PTN), Bio-Feed^{™} Pro and Clear-Lens^{™} Pro; Blaze (all available from Novozymes A/S, Bagsvaerd, Denmark). Other commercially available proteases include Neutrase^{™}, Ronozyme^{™} Pro, Maxatase^{™}, Maxacai^{™}, Maxapem^{™}, Opticlean^{™}, Properase^{™}, Purafast^{™}, Purafect^{™}, Purafect Ox^{™}, Purafact Prime^{™}, Excellase^{™}, FN2^{™}, FN3^{™} and FN4^{™} (available from Novozymes, Genencor International Inc., Gist-Brocades, BASF, or DSM). Other examples are Primase^{™} and Duralase^{™}. Blap R, Blap S and Blap X available from Henkel are also examples.

Lyases: The lyase may be a pectate lyase derived from *Bacillus,* particularly B. *licherniformis* or B. *agaradhaerens,* or a variant derived of any of these, e.g. as described in US 6124127, WO 99/027083, WO 99/027084, WO 02/006442, WO 02/092741, WO 03/095638, Commercially available pectate lyases are XPect; Pectawash and Pectaway (Novozymes A/S).

Mannanase: The mannanase may be an alkaline mannanase of Family 5 or 26. It may be a wild-type from *Bacillus* or *Humicola,* particularly B. *agaradhaerens, B. licheniformis, B. halodurans, B. clausii,* or *H. insolens.* Suitable mannanases are described in WO 99/064619. A commercially available mannanase is Mannaway (Novozymes A/S).

Cellulases: Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium, e.g.,* the fungal cellulases produced from *Humicola insolens, Myceliophthora thermophila* and *Fusarium oxysporum* disclosed in US 4,435,307, US 5,648,263, US 5,691,178, US 5,776,757 and WO 89/09259.

Especially suitable cellulases are the alkaline or neutral cellulases having color care benefits. Examples of such cellulases are cellulases described in EP 0 495 257, EP 0 531 372, WO 96/11262, WO 96/29397, WO 98/08940. Other examples are cellulase variants such as those described in WO 94/07998, EP 0 531 315, US 5,457,046, US 5,686,593, US 5,763,254, WO 95/24471, WO 98/12307 and PCT/DK98/00299.

Commercially available cellulases include Celluzyme^{™}, and Carezyme^{™} (Novozymes A/S), Clazinase^{™}, and Puradax HA^{™} (Genencor International Inc.), and KAC-500(B)^{™} (Kao Corporation).

Lipases and Cutinases: Suitable lipases and cutinases include those of bacterial or fungal origin. Chemically modified or protein engineered mutants are included. Examples include lipase from *Thermomyces, e.g.,* from *T. lanuginosus* (previously named *Humicola lanuginosa*) as described in EP 258 068 and EP 305 216, cutinase from *Humicola, e.g., H. insolens* as described in WO 96/13580, a *Pseudomonas* lipase, *e.g.,* from *P*. *alcaligenes* or *P*. *pseudoalcaligenes* (EP 218 272), *P. cepacia* (EP 331 376), *P. stutzeri* (GB 1,372,034), *P*. *fluorescens, Pseudomonas sp.* strain SD 705 (WO 95/06720 and WO 96/27002), *P*. *wisconsinensis* (WO 96/12012), a *Bacillus* lipase, *e.g.,* from *B*. *subtilis* (Dartois et al., 1993, Biochemica et Biophysica Acta, 1131: 253-360), *B. stearothermophilus* (JP 64/744992) or *B*. *pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079, WO 97/07202, WO 00/060063, WO 2007/087508 and WO 2009/109500.

Preferred commercially available lipase enzymes include Lipolase^{™}, Lipolase Ultra^{™}, and Lipex^{™}; Lecitase^{™}, Lipolex^{™}; Lipoclean^{™}, Lipoprime^{™} (Novozymes A/S). Other commercially available lipases include Lumafast (Genencor Int Inc); Lipomax (Gist-Brocades/Genencor Int Inc) and *Bacillus* sp. lipase from Solvay.

In an embodiment of the invention, the amino acid sequence of the lipase has at least 70% sequence identity, preferably at least 75%, more preferably at least 80%, more preferably at least 85%, more preferably at least 90%, more preferably at least 95%, 96%, 97%, 98%, 99%, and most preferably 100% sequence identity to the amino acid sequence of SEQ ID NO: 1. In another embodiment, the number of amino acid substitutions, deletions and/or insertions introduced into the amino acid sequence of SEQ ID NO: 1 is up to 10, *e.g.,* 1, 2, 3, 4, 5, 6, 7, 8, 9, or 10; or up to 5, *e.g.,* 1, 2, 3, 4, or 5.

Amylases: Suitable amylases (α and/or β) include those of bacterial or fungal origin. Chemically modified or protein engineered mutants are included. Amylases include, for example, α-amylases obtained from *Bacillus, e.g.,* a special strain of *Bacillus licheniformis,* described in more detail in GB 1,296,839.

Examples of suitable amylases include amylases having SEQ ID NO: 2 in WO 95/10603 or variants having 90% sequence identity to SEQ ID NO: 3 thereof. Preferred variants are described in WO 94/02597, WO 94/18314, WO 97/43424 and SEQ ID NO: 4 of WO 99/019467, such as variants with substitutions in one or more of the following positions: 15, 23, 105, 106, 124, 128, 133, 154, 156, 178, 179, 181, 188, 190, 197, 201, 202, 207, 208, 209, 211, 243, 264, 304, 305, 391, 408, and 444.

Different suitable amylases include amylases having SEQ ID NO: 6 in WO 02/010355 or variants thereof having 90% sequence identity to SEQ ID NO: 6. Preferred variants of SEQ ID NO: 6 are those having a deletion in positions 181 and 182 and a substitution in position 193. Other amylases which are suitable are hybrid alpha-amylase comprising residues 1-33 of the alpha-amylase derived from B. *amyloliquefaciens* shown in SEQ ID NO: 6 of WO 2006/066594 and residues 36-483 of the *B. licheniformis* alpha-amylase shown in SEQ ID NO: 4 of WO 2006/066594 or variants having 90% sequence identity thereof. Preferred variants of this hybrid alpha-amylase are those having a substitution, a deletion or an insertion in one of more of the following positions: G48, T49, G107, H156, A181, N190, M197, I201, A209 and Q264. Most preferred variants of the hybrid alpha-amylase comprising residues 1-33 of the alpha-amylase derived from B. *amyloliquefaciens* shown in SEQ ID NO: 6 of WO 2006/066594 and residues 36-483 of SEQ ID NO: 4 are those having the substitutions:
M197T;
H156Y+A181T+ N190F+A209V+Q264S; or
G48A+T49I+G107A+H156Y+A181T+N190F+1201F+A209V+Q264S.

Further amylases which are suitable are amylases having SEQ ID NO: 6 in WO 99/019467 or variants thereof having 90% sequence identity to SEQ ID NO: 6. Preferred variants of SEQ ID NO: 6 are those having a substitution, a deletion or an insertion in one or more of the following positions: R181, G182, H183, G184, N195, I206, E212, E216 and K269. Particularly preferred amylases are those having deletion in positions R181 and G182, or positions H183 and G184.

Additional amylases which can be used are those having SEQ ID NO: 1, SEQ ID NO: 3, SEQ ID NO: 2 or SEQ ID NO: 7 of WO 96/023873 or variants thereof having 90% sequence identity to SEQ ID NO: 1, SEQ ID NO: 2, SEQ ID NO: 3 or SEQ ID NO: 7. Preferred variants of SEQ ID NO: 1, SEQ ID NO: 2, SEQ ID NO: 3 or SEQ ID NO: 7 are those having a substitution, a deletion or an insertion in one or more of the following positions: 140, 181, 182, 183, 184, 195, 206, 212, 243, 260, 269, 304 and 476. More preferred variants are those having a deletion in positions 181 and 182 or positions 183 and 184. Most preferred amylase variants of SEQ ID NO: 1, SEQ ID NO: 2 or SEQ ID NO: 7 are those having a deletion in positions 183 and 184 and a substitution in one or more of positions 140, 195, 206, 243, 260, 304 and 476.

Other amylases which can be used are amylases having SEQ ID NO: 2 of WO 08/153815, SEQ ID NO: 10 in WO 01/66712 or variants thereof having 90% sequence identity to SEQ ID NO: 2 of WO 08/153815 or 90% sequence identity to SEQ ID NO: 10 in WO 01/66712. Preferred variants of SEQ ID NO: 10 in WO 01/66712 are those having a substitution, a deletion or an insertion in one of more of the following positions: 176, 177, 178, 179, 190, 201, 207, 211 and 264.

Further suitable amylases are amylases having SEQ ID NO: 2 of WO 09/061380 or variants having 90% sequence identity to SEQ ID NO: 2 thereof. Preferred variants of SEQ ID NO: 2 are those having a truncation of the C-terminus and/or a substitution, a deletion or an insertion in one of more of the following positions: Q87, Q98, S125, N128, T131, T165, K178, R180, S181, T182, G183, M201, F202, N225, S243, N272, N282, Y305, R309, D319, Q320, Q359, K444 and G475. More preferred variants of SEQ ID NO: 2 are those having the substitution in one of more of the following positions: Q87E,R, Q98R, S125A, N128C, T131I, T165I, K178L, T182G, M201L, F202Y, N225E,R, N272E,R, S243Q,A,E,D, Y305R, R309A, Q320R, Q359E, K444E and G475K and/or deletion in position R180 and/or S181 or of T182 and/or G183. Most preferred amylase variants of SEQ ID NO: 2 are those having the substitutions:
N128C+K178L+T182G+Y305R+G475K;
N128C+K178L+T182G+F202Y+Y305R+D319T+G475K;
S125A+N128C+K178L+T182G+Y305R+G475K; or
S125A+N128C+T131I+T165I+K178L+T182G+Y305R+G475K wherein the variants are C-terminally truncated and optionally further comprises a substitution at position 243 and/or a deletion at position 180 and/or position 181.

Other suitable amylases are the alpha-amylase having SEQ ID NO: 12 in WO01/66712 or a variant having at least 90% sequence identity to SEQ ID NO: 12. Preferred amylase variants are those having a substitution, a deletion or an insertion in one of more of the following positions of SEQ ID NO: 12 in WO01/66712: R28, R118, N174; R181, G182, D183, G184, G186, W189, N195, M202, Y298, N299, K302, S303, N306, R310, N314; R320, H324, E345, Y396, R400, W439, R444, N445, K446, Q449, R458, N471, N484. Particular preferred amylases include variants having a deletion of D183 and G184 and having the substitutions R118K, N195F, R320K and R458K, and a variant additionally having substitutions in one or more position selected from the group: M9, G149, G182, G186, M202, T257, Y295, N299, M323, E345 and A339, most preferred a variant that additionally has substitutions in all these positions.

Other examples are amylase variants such as those described in WO2011/098531, WO2013/001078 and WO2013/001087.

Commercially available amylases are Stainzyme; Stainzyme Plus; Duramyl^{™}, Termamyl^{™}, Termamyl Ultra; Natalase, Fungamyl^{™} and BAN^{™} (Novozymes A/S), Rapidase^{™} and Purastar^{™}/Effectenz^{™}, Powerase and Preferenz S100 (from Genencor International Inc./DuPont).

Deoxyribonuclease (DNase): Suitable deoxyribonucleases (DNases) are any enzyme that catalyzes the hydrolytic cleavage of phosphodiester linkages in the DNA backbone, thus degrading DNA. According to the invention, a DNase which is obtainable from a bacterium is preferred; in particular a DNase which is obtainable from a *Bacillus* is preferred; in particular a DNase which is obtainable from *Bacillus subtilis* or *Bacillus licheniformis* is preferred. Examples of such DNases are described in patent application WO 2011/098579 or in PCT/EP2013/075922.

Perhydrolases: Suitable perhydrolases are capable of catalyzing a perhydrolysis reaction that results in the production of a peracid from a carboxylic acid ester (acyl) substrate in the presence of a source of peroxygen (e.g., hydrogen peroxide). While many enzymes perform this reaction at low levels, perhydrolases exhibit a high perhydrolysis:hydrolysis ratio, often greater than 1. Suitable perhydrolases may be of plant, bacterial or fungal origin. Chemically modified or protein engineered mutants are included.

Examples of useful perhydrolases include naturally occurring *Mycobacterium* perhydrolase enzymes, or variants thereof. An exemplary enzyme is derived from *Mycobacterium smegmatis.* Such enzyme, its enzymatic properties, its structure, and variants thereof, are described in WO 2005/056782, WO 2008/063400, US 2008/145353, and US2007167344.

Oxidases/peroxidases: Suitable oxidases and peroxidases (or oxidoreductases) include various sugar oxidases, laccases, peroxidases and haloperoxidases.

Suitable peroxidases include those comprised by the enzyme classification EC 1.11.1.7, as set out by the Nomenclature Committee of the International Union of Biochemistry and Molecular Biology (IUBMB), or any fragment derived therefrom, exhibiting peroxidase activity.

Suitable peroxidases include those of plant, bacterial or fungal origin. Chemically modified or protein engineered mutants are included. Examples of useful peroxidases include peroxidases from *Coprinopsis, e.g.,* from *C*. *cinerea* (EP 179,486), and variants thereof as those described in WO 93/24618, WO 95/10602, and WO 98/15257.

A peroxidase for use in the invention also include a haloperoxidase enzyme, such as chloroperoxidase, bromoperoxidase and compounds exhibiting chloroperoxidase or bromoperoxidase activity. Haloperoxidases are classified according to their specificity for halide ions. Chloroperoxidases (E.C. 1.11.1.10) catalyze formation of hypochlorite from chloride ions.

In an embodiment, the haloperoxidase is a chloroperoxidase. Preferably, the haloperoxidase is a vanadium haloperoxidase, *i.e*., a vanadate-containing haloperoxidase. In a preferred method of the present invention the vanadate-containing haloperoxidase is combined with a source of chloride ion.

Haloperoxidases have been isolated from many different fungi, in particular from the fungus group dematiaceous hyphomycetes, such as *Caldariomyces, e.g., C. fumago, Alternaria, Curvularia, e.g., C*. *verruculosa* and *C*. *inaequalis, Drechslera, Ulocladium* and *Botrytis.*

Haloperoxidases have also been isolated from bacteria such as *Pseudomonas, e.g., P. pyrrocinia* and *Streptomyces, e.g., S. aureofaciens.*

In an preferred embodiment, the haloperoxidase is derivable from *Curvularia* sp., in particular *Curvularia verruculosa* or *Curvularia inaequalis,* such as *C*. *inaequalis* CBS 102.42 as described in WO 95/27046; or *C*. *verruculosa* CBS 147.63 or *C*. *verruculosa* CBS 444.70 as described in WO 97/04102; or from *Drechslera hartlebii* as described in WO 01/79459, *Dendryphiella salina* as described in WO 01/79458, *Phaeotrichoconis crotalarie* as described in WO 01/79461, or *Geniculosporium* sp. as described in WO 01/79460.

An oxidase according to the invention include, in particular, any laccase enzyme comprised by the enzyme classification EC 1.10.3.2, or any fragment derived therefrom exhibiting laccase activity, or a compound exhibiting a similar activity, such as a catechol oxidase (EC 1.10.3.1), an o-aminophenol oxidase (EC 1.10.3.4), or a bilirubin oxidase (EC 1.3.3.5).

Preferred laccase enzymes are enzymes of microbial origin. The enzymes may be derived from plants, bacteria or fungi (including filamentous fungi and yeasts).

Suitable examples from fungi include a laccase derivable from a strain of *Aspergillus, Neurospora, e.g., N. crassa, Podospora, Botrytis, Collybia, Fomes, Lentinus, Pleurotus, Trametes, e.g., T. villosa* and *T. versicolor, Rhizoctonia, e.g., R. solani, Coprinopsis, e.g., C. cinerea, C. comatus, C. friesii,* and *C*. *plicatilis, Psathyrella, e.g., P. condelleana, Panaeolus, e.g., P. papilionaceus, Myceliophthora, e.g., M. thermophila, Schytalidium, e.g., S. thermophilum, Polyporus, e.g., P. pinsitus, Phlebia, e.g., P. radiata* (WO 92/01046), or *Coriolus, e.g., C. hirsutus* (JP 2238885).

Suitable examples from bacteria include a laccase derivable from a strain of *Bacillus.*

A laccase derived from *Coprinopsis* or *Myceliophthora* is preferred; in particular a laccase derived from *Coprinopsis cinerea,* as disclosed in WO 97/08325; or from *Myceliophthora thermophila,* as disclosed in WO 95/33836.

Examples of other oxidases include, but are not limited to, amino acid oxidase, glucose oxidase, lactate oxidase, galactose oxidase, polyol oxidase (*e*.*g*., WO2008/051491), and aldose oxidase. Oxidases and their corresponding substrates may be used as hydrogen peroxide generating enzyme systems, and thus a source of hydrogen peroxide. Several enzymes, such as peroxidases, haloperoxidases and perhydrolases, require a source of hydrogen peroxide. By studying EC 1.1.3._, EC 1.2.3._, EC 1.4.3._, and EC 1.5.3._ or similar classes (under the International Union of Biochemistry), other examples of such combinations of oxidases and substrates are easily recognized by one skilled in the art.

Amino acid changes in the lipase amino acid sequence shown as SEQ ID NO: 1, as referenced above, may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function, such as a poly-histidine tract, an antigenic epitope or a binding domain.

Examples of conservative substitutions are within the groups of basic amino acids (arginine, lysine and histidine), acidic amino acids (glutamic acid and aspartic acid), polar amino acids (glutamine and asparagine), hydrophobic amino acids (leucine, isoleucine and valine), aromatic amino acids (phenylalanine, tryptophan and tyrosine), and small amino acids (glycine, alanine, serine, threonine and methionine). Amino acid substitutions that do not generally alter specific activity are known in the art and are described, for example, by H. Neurath and R.L. Hill, 1979, In, The Proteins, Academic Press, New York. Common substitutions are Ala/Ser, Val/Ile, Asp/Glu, Thr/Ser, Ala/Gly, Ala/Thr, Ser/Asn, Ala/Val, Ser/Gly, Tyr/Phe, Ala/Pro, Lys/Arg, Asp/Asn, Leu/Ile, Leu/Val, Ala/Glu, and Asp/Gly.

Essential amino acids in a polypeptide can be identified according to procedures known in the art, such as site-directed mutagenesis or alanine-scanning mutagenesis (Cunningham and Wells, 1989, Science 244: 1081-1085). In the latter technique, single alanine mutations are introduced at every residue in the molecule, and the resultant mutant molecules are tested for enzyme activity to identify amino acid residues that are critical to the activity of the molecule. See also, Hilton et al., 1996, J. Biol. Chem. 271: 4699-4708. The active site of the enzyme or other biological interaction can also be determined by physical analysis of structure, as determined by such techniques as nuclear magnetic resonance, crystallography, electron diffraction, or photoaffinity labeling, in conjunction with mutation of putative contact site amino acids. See, for example, de Vos et al., 1992, Science 255: 306-312; Smith et al., 1992, J. Mol. Biol. 224: 899-904; Wlodaver et al., 1992, FEBS Lett. 309: 59-64. The identity of essential amino acids can also be inferred from an alignment with a related polypeptide.

Single or multiple amino acid substitutions, deletions, and/or insertions can be made and tested using known methods of mutagenesis, recombination, and/or shuffling, followed by a relevant screening procedure, such as those disclosed by Reidhaar-Olson and Sauer, 1988, Science 241: 53-57; Bowie and Sauer, 1989, Proc. Natl. Acad. Sci. USA 86: 2152-2156; WO 95/17413; or WO 95/22625. Other methods that can be used include error-prone PCR, phage display (*e.g.,* Lowman et al., 1991, Biochemistry 30: 10832-10837; U.S. Patent No. 5,223,409; WO 92/06204), and region-directed mutagenesis (Derbyshire et al., 1986, Gene 46: 145; Ner et al., 1988, DNA 7: 127).

The relatedness between two amino acid sequences is described by the parameter "sequence identity". For purposes of the present invention, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows: (identical Residues x 100)/(Length of Alignment - Total Number of Gaps in Alignment).

### Enzyme stabilizers and/or rheology modifiers

The microcapsules may also contain enzyme stabilizers as known in the art, e.g., polyols, polymers, reversible enzyme inhibitors, divalent cations, enzyme substrates, antioxidants etc. Water-soluble stabilizers are preferred.

Addition of slowly dissolving stabilizers can be used to create a local environment inside the capsule, which is more "friendly" to the encapsulated enzyme/compound, thus improving the stability during storage.

Examples of reversible protease inhibitors are boronic acids, peptide aldehydes and derivatives hereof and high molecular protein-type inhibitors (like BASI/RASI inhibitors, see WO 2009/095425). An example of metalloprotease inhibitors is described in WO 2008/134343. Protease inhibitors are described in more detail below under the heading "Protease Inhibitors".

Stabilizing polymers can be based on, e.g., polyvinylypyrrolidone, polyvinylacetate, polyvinylalcohol and copolymers thereof. Stabilizing polyols can be smaller molecules like glycerol, sorbitol, propylene glycol etc. but also larger molecules like polyethylene glycol, polysaccharides etc.

Of stabilizing divalent cations Ca²⁺, Mg²⁺ and Zn²⁺ are well-known in the art. Thus, in an embodiment, the microcapsules of the invention comprise a source of Ca²⁺, Mg²⁺ or Zn²⁺ ions. Preferably, the source of Ca²⁺, Mg²⁺ or Zn²⁺ ions is a poorly soluble (slowly dissolving) salt of Ca²⁺, Mg²⁺ or Zn²⁺. Poorly soluble means that the solubility in pure water at 20°C is less than 5 g/l, 2 g/l, 1 g/l, 0.5 g/l, 0.2 g/l, 0.1 g/l, or 0.05 g/l. Preferred salts of Ca²⁺, Mg²⁺ or Zn²⁺ are calcium carbonate, magnesium carbonate, zinc carbonate, calcium sulfate, calcium sulfite, magnesium sulfite, zinc sulfite, calcium phosphate, dicalcium phosphate, magnesium phosphate, zinc phosphate, calcium citrate, magnesium citrate, zinc citrate, calcium oxalate, magnesium oxalate, zinc oxalate, calcium tartrate, magnesium tartrate, or zinc tartrate.

Also slowly dissolving acids or bases can be used to create a local pH inside the microcapsule, which is more "friendly" to the encapsulated enzyme/compound.

Enzymes are in most cases stabilized by addition of their substrates (*e*.*g*., protein for proteases, starch for amylases etc.). Antioxidants or reducing agents can be applied to reduce oxidation of enzymes, *e*.*g*., thiosulfate, ascorbate etc. The net dosage needed of these stabilizers per gram detergent is much lower compared to adding the stabilizers to the continuous detergent phase, as they are concentrated in the internal capsule phase, and will in many cases either not diffuse out during storage, or only slowly diffuse out depending on the structure and molecular weight of the stabilizer. Especially high molecular weight stabilizers (*e*.*g*., higher than 1 kDa, or higher than 2 kDa more preferred higher than 5 kDa) will give improved net efficiency. High molecular weight inhibitors, polymers, polyols, cations, enzyme substrates and antioxidants are thus preferred.

The enzyme may be protected by addition of a "scavenger" protein. Components destabilizing enzyme by reacting onto amino acid groups (*e*.*g*., amines) on the protein may thus react with the scavenger or sacrificial protein added. Scavenger protein with a sufficient large molecular weight to stay inside the capsules are preferred.

A somewhat different way to improve the enzyme stability is to add rheology modifying components that increase viscosity of the internal capsule phase. An increased internal viscosity will slow down diffusion of enzyme destabilizers into the capsules (and/or slow down the diffusion of enzyme stabilizers out of the capsule) and thus prolong the lifetime of the enzyme. Examples of such viscosity modifiers are polymers like polyethylene glycol (PEG), polyethylene oxide (PEO), hydrophilic polyurethane, polyvinylpyrrolidone (PVP) and PVP vinyl acetate copolymers, starch, hyaluronic acid, chitosan, water-soluble cellulose derivatives like carboxymethyl cellulose, water-soluble gums like gum Arabic, locust bean gum, guar gum or xanthan gum etc. and combinations or copolymers hereof. Most preferred are nonionic high molecular weight polymers, with a molecular weight higher than 1 kDa, preferably higher than 2 kDa, more preferably higher than 5 kDa, and most preferably even higher than 10 kDa. Nonionic polymers are preferred as they in most cases are more compatible with the reactive membrane polymer than ionic polymers.

The high viscosity can either be accomplished by producing the capsules using a high viscosity aqueous phase, or - more sophisticated - producing capsules where the viscosity increase first occur after producing the emulsion/capsules. This "triggered" viscosity increase is preferable as preparing emulsions with a high viscosity aqueous phase can be difficult. Triggered viscosity increase can be done in situ when added to detergent by the internal capsule phase having a higher water activity than the detergent to which it is added, thus water will diffuse out of the capsules (but not the rheology modifier) increasing the viscosity of the internal phase after addition to detergent. This can also be utilized using diffusion of salt or other low molecular components, *e*.*g*., by having a component that will increase viscosity when salt concentration is reduced by addition to detergent (*e*.*g*., a polymer that is precipitated at the initial high salt content but soluble when salt concentration is reduced due to diffusion of salt when added to detergent). Another way to trigger viscosity is to use components where the viscosity is dependent on the pH. For some interfacial polymerization processes (*e*.*g*., amine - acid halogen reaction) the pH of the internal phase will change during encapsulation, in the case of amine-acid halogen pH will be reduced during the interfacial polymerization. This can be used to trigger an increase in viscosity. Many rheology modifiers like polyacrylates show a viscosity maximum at a specific pH or pH range. Carbopol 934 from Lubrizol and Texipol 63-258 from Scott-Bader are examples of rheology modifiers where viscosity is significantly increased when reducing the pH from 11 to 8, or increasing pH from 4 to 8. Another polymer type with a different viscosity at low pH and at high pH is partially hydrolyzed polyacrylamide. Yet another possibility is to use rheology modifiers which are temperature dependent, thus making the emulsion/encapsulation at one temperature, and subsequently changing the temperature to increase viscosity. Also, a light or ultrasound induced viscosity can be utilized. Yet another method is to use shear-thinning rheology modifiers, such that the viscosity is low at high shear when the emulsion is formed and high when shear is reduced.

Another stabilization technique is to assure that the enzyme is precipitated in the capsules during storage, for example by addition of precipitants like salt or polyethylene glycol (PEG). The same "triggered stabilization" as described above can be used, *e*.*g*., by addition of PEG, which after addition to detergent is concentrated by water diffusing out to a degree where the enzyme will precipitate. In this way the enzyme can be in solution during processing of the capsules, but precipitated when added to detergent.

Enzymes can also be used in precipitated or crystal form when preparing the microcapsules.

### Detergent compositions

The microcapsules of the invention may be added to, and thus form part of, any detergent composition in any form, such as liquid and powder detergents, and soap and detergent bars (e.g., syndet bars).

In one embodiment, the invention is directed to liquid detergent compositions comprising a microcapsule, as described above, in combination with one or more additional cleaning composition components.

The microcapsule, as described above, may be added to the liquid detergent composition in an amount corresponding to from 0.0001% to 5% (w/w) active enzyme protein (AEP); preferably from 0.001% to 5%, more preferably from 0.005% to 5%, more preferably from 0.005% to 4%, more preferably from 0.005% to 3%, more preferably from 0.005% to 2%, even more preferably from 0.01% to 2%, and most preferably from 0.01% to 1% (w/w) active enzyme protein.

The liquid detergent composition has a physical form, which is not solid (or gas). It may be a pourable liquid, a paste, a pourable gel or a non-pourable gel. It may be either isotropic or structured, preferably isotropic. It may be a formulation useful for washing in automatic washing machines or for hand washing, or for (automatic) dish wash. It may also be a personal care product, such as a shampoo, toothpaste, or a hand soap.

The liquid detergent composition may be aqueous, typically containing at least 20% by weight and up to 95% water, such as up to 70% water, up to 50% water, up to 40% water, up to 30% water, or up to 20% water. Other types of liquids, including without limitation, alkanols, amines, diols, ethers and polyols may be included in an aqueous liquid detergent. An aqueous liquid detergent may contain from 0-30% organic solvent. A liquid detergent may even be non-aqueous, wherein the water content is below 10%, preferably below 5%.

Detergent ingredients can be separated physically from each other by compartments in water dissolvable pouches. Thereby negative storage interaction between components can be avoided. Different dissolution profiles of each of the compartments can also give rise to delayed dissolution of selected components in the wash solution.

The detergent composition may take the form of a unit dose product. A unit dose product is the packaging of a single dose in a non-reusable container. It is increasingly used in detergents for laundry and dish wash. A detergent unit dose product is the packaging (*e*.*g*., in a pouch made from a water-soluble film) of the amount of detergent used for a single wash.

Pouches can be of any form, shape and material which is suitable for holding the composition, *e*.*g*., without allowing the release of the composition from the pouch prior to water contact. The pouch is made from water-soluble film which encloses an inner volume. Said inner volume can be divided into compartments of the pouch. Preferred films are polymeric materials preferably polymers which are formed into a film or sheet. Preferred polymers, copolymers or derivates thereof are selected polyacrylates, and water-soluble acrylate copolymers, methyl cellulose, carboxy methyl cellulose, sodium dextrin, ethyl cellulose, hydroxyethyl cellulose, hydroxypropyl methyl cellulose, maltodextrin, poly methacrylates, most preferably polyvinyl alcohol copolymers and, hydroxypropyl methyl cellulose (HPMC). Preferably the level of polymer in the film for example PVA is at least about 60%. Preferred average molecular weight will typically be about 20,000 to about 150,000. Films can also be a blend compositions comprising hydrolytically degradable and water-soluble polymer blends such as polyactide and polyvinyl alcohol (known under the Trade reference M8630 as sold by Chris Craft In. Prod. Of Gary, Ind., US) plus plasticizers like glycerol, ethylene glycerol, Propylene glycol, sorbitol and mixtures thereof. The pouches can comprise a solid laundry cleaning composition or part components and/or a liquid cleaning composition or part components separated by the water-soluble film. The compartment for liquid components can be different in composition than compartments containing solids (see *e*.*g*., US 2009/0011970).

The choice of detergent components may include, for textile care, the consideration of the type of textile to be cleaned, the type and/or degree of soiling, the temperature at which cleaning is to take place, and the formulation of the detergent product. Although components mentioned below are categorized by general header according to a particular functionality, this is not to be construed as a limitation, as a component may comprise additional functionalities as will be appreciated by the skilled artisan.

The choice of additional components is within the skill of the artisan and includes conventional ingredients, including the exemplary non-limiting components set forth below.

### Surfactants

The detergent composition may comprise one or more surfactants, which may be anionic and/or cationic and/or non-ionic and/or semi-polar and/or zwitterionic, or a mixture thereof. In a particular embodiment, the detergent composition includes a mixture of one or more nonionic surfactants and one or more anionic surfactants. The surfactant(s) is typically present at a level of from about 0.1% to 60% by weight, such as about 1% to about 40%, or about 3% to about 20%, or about 3% to about 10%. The surfactant(s) is chosen based on the desired cleaning application, and includes any conventional surfactant(s) known in the art. Any surfactant known in the art for use in detergents may be utilized.

When included therein the detergent will usually contain from about 1% to about 40% by weight, such as from about 5% to about 30%, including from about 5% to about 15%, or from about 20% to about 25% of an anionic surfactant. Non-limiting examples of anionic surfactants include sulfates and sulfonates, in particular, linear alkylbenzenesulfonates (LAS), isomers of LAS, branched alkylbenzenesulfonates (BABS), phenylalkanesulfonates, alpha-olefinsulfonates (AOS), olefin sulfonates, alkene sulfonates, alkane-2,3-diylbis(sulfates), hydroxyalkanesulfonates and disulfonates, alkyl sulfates (AS) such as sodium dodecyl sulfate (SDS), fatty alcohol sulfates (FAS), primary alcohol sulfates (PAS), alcohol ethersulfates (AES or AEOS or FES, also known as alcohol ethoxysulfates or fatty alcohol ether sulfates), secondary alkanesulfonates (SAS), paraffin sulfonates (PS), ester sulfonates, sulfonated fatty acid glycerol esters, alpha-sulfo fatty acid methyl esters (alpha-SFMe or SES) including methyl ester sulfonate (MES), alkyl- or alkenylsuccinic acid, dodecenyl/tetradecenyl succinic acid (DTSA), fatty acid derivatives of amino acids, diesters and monoesters of sulfo-succinic acid or soap, and combinations thereof.

When included therein the detergent will usually contain from about 0.1% to about 10% by weight of a cationic surfactant. Non-limiting examples of cationic surfactants include alklydimethylethanolamine quat (ADMEAQ), cetyltrimethylammonium bromide (CTAB), dimethyldistearylammonium chloride (DSDMAC), and alkylbenzyldimethylammonium, alkyl quaternary ammonium compounds, alkoxylated quaternary ammonium (AQA) compounds, and combinations thereof.

When included therein the detergent will usually contain from about 0.2% to about 40% by weight of a non-ionic surfactant, for example from about 0.5% to about 30%, in particular from about 1% to about 20%, from about 3% to about 10%, such as from about 3% to about 5%, or from about 8% to about 12%. Non-limiting examples of non-ionic surfactants include alcohol ethoxylates (AE or AEO), alcohol propoxylates, propoxylated fatty alcohols (PFA), alkoxylated fatty acid alkyl esters, such as ethoxylated and/or propoxylated fatty acid alkyl esters, alkylphenol ethoxylates (APE), nonylphenol ethoxylates (NPE), alkylpolyglycosides (APG), alkoxylated amines, fatty acid monoethanolamides (FAM), fatty acid diethanolamides (FADA), ethoxylated fatty acid monoethanolamides (EFAM), propoxylated fatty acid monoethanolamides (PFAM), polyhydroxy alkyl fatty acid amides, or *N*-acyl *N*-alkyl derivatives of glucosamine (glucamides, GA, or fatty acid glucamide, FAGA), as well as products available under the trade names SPAN and TWEEN, and combinations thereof.

The ratio between anionic and non-ionic surfactants can be 1:1, or higher than 1:1 (more anionic than non-ionic surfactant), or lower than 1:1 (less anionic than non-ionic surfactant), depending on the application and the other ingredients of the composition. Generally, a ratio lower than 1:1 improves enzyme stability. Automatic dish wash (ADW) detergents often have a higher content of non-ionic surfactant than anionic surfactant - anionic surfactants may even be absent in ADW detergents.

When included therein the detergent will usually contain from about 0.1% to about 20% by weight of a semipolar surfactant. Non-limiting examples of semipolar surfactants include amine oxides (AO) such as alkyldimethylamineoxide, *N*-(coco alkyl)-*N,N-*dimethylamine oxide and *N-*(tallow-alkyl)-*N,N*-bis(2-hydroxyethyl)amine oxide, fatty acid alkanolamides and ethoxylated fatty acid alkanolamides, and combinations thereof.

When included therein the detergent will usually contain from about 0.1% to about 10% by weight of a zwitterionic surfactant. Non-limiting examples of zwitterionic surfactants include betaine, alkyldimethylbetaine, sulfobetaine, and combinations thereof.

The above-mentioned surfactants may be biologically derived surfactants ('biosurfactants'), such as rhamnolipids, sophorolipids, mannosylerythritol lipids, cellobiose lipids, trehalose lipids, and/or other glycolipids.

The rhamnolipids, in particular mono-, di- or polyrhamnolipids, and/or sophorolipids, are preferably as described in EP 1445302 with the formulae (I), (II) or (III).

Other suitable sugar-based biosurfactants include maltopyranosides, thiomaltopyranosides, glucopyranosides, and their derivatives, as shown in WO 2011/078949.

Further possible biosurfactants include, but are not limited to, surfactin (or other lipopeptides or glycolipopeptides) and saponin (or other plant derived amphipathic glycosides).

### Hydrotropes

A hydrotrope is a compound that solubilises hydrophobic compounds in aqueous solutions (or oppositely, polar substances in a non-polar environment). Typically, hydrotropes have both hydrophilic and a hydrophobic character (so-called amphiphilic properties as known from surfactants); however, the molecular structure of hydrotropes generally do not favor spontaneous self-aggregation, see for example review by Hodgdon and Kaler (2007), Current Opinion in Colloid & Interface Science 12: 121-128. Hydrotropes do not display a critical concentration above which self-aggregation occurs as found for surfactants and lipids forming miceller, lamellar or other well defined meso-phases. Instead, many hydrotropes show a continuous-type aggregation process where the sizes of aggregates grow as concentration increases. However, many hydrotropes alter the phase behavior, stability, and colloidal properties of systems containing substances of polar and non-polar character, including mixtures of water, oil, surfactants, and polymers. Hydrotropes are classically used across industries from pharma, personal care, food, to technical applications. Use of hydrotropes in detergent compositions allow for example more concentrated formulations of surfactants (as in the process of compacting liquid detergents by removing water) without inducing undesired phenomena such as phase separation or high viscosity.

The detergent may contain 0-5% by weight, such as about 0.5 to about 5%, or about 3% to about 5%, of a hydrotrope. Any hydrotrope known in the art for use in detergents may be utilized. Non-limiting examples of hydrotropes include sodium benzene sulfonate, sodium p-toluene sulfonate (STS), sodium xylene sulfonate (SXS), sodium cumene sulfonate (SCS), sodium cymene sulfonate, amine oxides, alcohols and polyglycolethers, sodium hydroxynaphthoate, sodium hydroxynaphthalene sulfonate, sodium ethylhexyl sulfate, and combinations thereof.

### Builders and Co-Builders

The detergent composition may contain about 0-65% by weight, such as about 5% to about 50% of a detergent builder or co-builder, or a mixture thereof. In a dish wash detergent, the level of builder is typically 40-65%, particularly 50-65%. The builder and/or co-builder may particularly be a chelating agent that forms water-soluble complexes with Ca and Mg ions. Any builder and/or co-builder known in the art for use in laundry detergents may be utilized. Non-limiting examples of builders include citrates, zeolites, diphosphates (pyrophosphates), triphosphates such as sodium triphosphate (STP or STPP), carbonates such as sodium carbonate, soluble silicates such as sodium metasilicate, layered silicates (*e.g*., SKS-6 from Hoechst), ethanolamines such as 2-aminoethan-1-ol (MEA), diethanolamine (DEA, also known as iminodiethanol), triethanolamine (TEA, also known as 2,2',2"-nitrilotriethanol), and carboxymethyl inulin (CMI), and combinations thereof.

The detergent composition may also contain 0-50% by weight, such as about 5% to about 30%, of a detergent co-builder, or a mixture thereof. The detergent composition may include include a co-builder alone, or in combination with a builder, for example a citrate builder. Non-limiting examples of co-builders include homopolymers of polyacrylates or copolymers thereof, such as poly(acrylic acid) (PAA) or copoly(acrylic acid/maleic acid) (PAA/PMA). Further non-limiting examples include citrate, chelators such as aminocarboxylates, aminopolycarboxylates and phosphonates, and alkyl- or alkenylsuccinic acid. Additional specific examples include 2,2',2"-nitrilotriacetic acid (NTA), ethylenediaminetetraacetic acid (EDTA), diethylenetriaminepentaacetic acid (DTPA), iminodisuccinic acid (IDS), ethylenediamine-*N,N*'-disuccinic acid (EDDS), methylglycinediacetic acid (MGDA), glutamic acid-N,N-diacetic acid (GLDA), 1-hydroxyethane-1,1-diphosphonic acid (HEDP), ethylenediaminetetra(methylenephosphonic acid) (EDTMPA), diethylenetriaminepentakis(methylenephosphonic acid) (DTMPA or DTPMPA), *N*-(2-hydroxyethyl)iminodiacetic acid (EDG), aspartic acid-N-monoacetic acid (ASMA), aspartic acid-*N,N*-diacetic acid (ASDA), aspartic acid-N-monopropionic acid (ASMP), iminodisuccinic acid (IDA), *N*-(2-sulfomethyl)-aspartic acid (SMAS), *N*-(2-sulfoethyl)-aspartic acid (SEAS), *N*-(2-sulfomethyl)-glutamic acid (SMGL), *N*-(2-sulfoethyl)-glutamic acid (SEGL), *N-*methyliminodiacetic acid (MIDA), α-alanine-*N*, *N*-diacetic acid (α-ALDA), serine-*N*, *N*-diacetic acid (SEDA), isoserine-*N*, *N*-diacetic acid (ISDA), phenylalanine-*N*, *N*-diacetic acid (PHDA), anthranilic acid-*N*, *N*-diacetic acid (ANDA), sulfanilic acid-*N*, *N*-diacetic acid (SLDA) , taurine-*N*, *N*-diacetic acid (TUDA) and sulfomethyl-*N*, *N*-diacetic acid (SMDA), *N*-(2-hydroxyethyl)-ethylidenediamine-*N*, *N'*, *N*'-triacetate (HEDTA), diethanolglycine (DEG), diethylenetriamine penta(methylenephosphonic acid) (DTPMP), aminotris(methylenephosphonic acid) (ATMP), and combinations and salts thereof. Further exemplary builders and/or co-builders are described in, *e*.*g*., WO 09/102854, US 5977053.

### Polymers

The detergent may contain 0-10% by weight, such as 0.5-5%, 2-5%, 0.5-2% or 0.2-1% of a polymer. Any polymer known in the art for use in detergents may be utilized. The polymer may function as a co-builder as mentioned above, or may provide anti redeposition, fiber protection, soil release, dye transfer inhibition, grease cleaning and/or anti-foaming properties. Some polymers may have more than one of the above-mentioned properties and/or more than one of the below-mentioned motifs. Exemplary polymers include (carboxymethyl)cellulose (CMC), poly(vinyl alcohol) (PVA), poly(vinylpyrrolidone) (PVP), poly(ethyleneglycol) or poly(ethylene oxide) (PEG), ethoxylated poly(ethyleneimine), carboxymethyl inulin (CMI), and polycarboxylates such as PAA, PAA/PMA, poly-aspartic acid, and lauryl methacrylate/acrylic acid copolymers , hydrophobically modified CMC (HM-CMC) and silicones, copolymers of terephthalic acid and oligomeric glycols, copolymers of poly(ethylene terephthalate) and poly(oxyethene terephthalate) (PET-POET), PVP, poly(vinylimidazole) (PVI), poly(vinylpyridine-N-oxide) (PVPO or PVPNO) and polyvinylpyrrolidone-vinylimidazole (PVPVI). Further exemplary polymers include sulfonated polycarboxylates, polyethylene oxide and polypropylene oxide (PEO-PPO) and diquaternium ethoxy sulfate. Other exemplary polymers are disclosed in, e.g., WO 2006/130575 and US 5,955,415. Salts of the above-mentioned polymers are also contemplated.

### Fabric hueing agents

The detergent compositions of the present invention may also include fabric hueing agents such as dyes or pigments, which when formulated in detergent compositions can deposit onto a fabric when said fabric is contacted with a wash liquor comprising said detergent compositions and thus altering the tint of said fabric through absorption/reflection of visible light. Fluorescent whitening agents emit at least some visible light. In contrast, fabric hueing agents alter the tint of a surface as they absorb at least a portion of the visible light spectrum. Suitable fabric hueing agents include dyes and dye-clay conjugates, and may also include pigments. Suitable dyes include small molecule dyes and polymeric dyes. Suitable small molecule dyes include small molecule dyes selected from the group consisting of dyes falling into the Colour Index (C.I.) classifications of Direct Blue, Direct Red, Direct Violet, Acid Blue, Acid Red, Acid Violet, Basic Blue, Basic Violet and Basic Red, or mixtures thereof, for example as described in WO 2005/03274, WO 2005/03275, WO 2005/03276 and EP 1876226.

The detergent composition preferably comprises from about 0.00003 wt% to about 0.2 wt%, from about 0.00008 wt% to about 0.05 wt%, or even from about 0.0001 wt% to about 0.04 wt% fabric hueing agent. The composition may comprise from 0.0001 wt% to 0.2 wt% fabric hueing agent, this may be especially preferred when the composition is in the form of a unit dose pouch. Suitable hueing agents are also disclosed in, e.g., WO 2007/087257 and WO 2007/087243.

### (Additional) Enzymes

Enzyme(s) which may be comprised in the detergent composition, which are not contained in a microcapsule, include one or more enzymes such as a protease, lipase, cutinase, amylase, carbohydrase, cellulase, pectinase, mannanase, arabinase, galactanase, xanthanase, xylanase, DNAse, perhydrolase, and/or oxidoreductases (*e*.*g*., laccase, peroxidase, peroxygenase and/or haloperoxidase).

Such enzyme(s) may be stabilized using conventional stabilizing agents, *e*.*g*., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in, for example, WO 92/19709 and WO 92/19708. Other stabilizers and inhibitors as known in the art can be added (see below). Examples of such enzymes are the same as those, which can be encapsulated in the microcapsule, as shown above.

When the microcapsule of the invention is used to encapsulate one or more enzymes detrimental to the stability of detergent components (*e*.*g*., xanthan gum, polymers with ester bonds, hydrogenated castor oil, perfume, methyl ester sulfonate surfactants, cellulose, cellulose derivatives, dextrin, and cyclodextrin), it may be useful to add components to the liquid detergent which inactivates any leaked enzyme(s) from the microcapsules. This can be done, *e*.*g*., by adding a protease to the detergent composition. If the microcapsules leak small amounts of the encapsulated enzymes, the protease can then be used as a scavenger to degrade the enzyme leaked from the microcapsules, and thus avoid degradation of sensitive detergent components.

The detergent enzyme(s) may be included in a detergent composition by adding separate additives containing one or more enzymes, or by adding a combined additive comprising all of these enzymes. A detergent additive of the invention, *i.e.,* a separate additive or a combined additive, can be formulated, for example, as a liquid, slurry, or even a granulate, etc.

### Protease Inhibitors

The detergent composition may include a protease inhibitor, which is a reversible inhibitor of protease activity, *e*.*g*., serine protease activity. Preferably, the protease inhibitor is a (reversible) subtilisin protease inhibitor. In particular, the protease inhibitor may be a peptide aldehyde, boric acid, or a boronic acid; or a derivative of any of these.

The protease inhibitor may have an inhibition constant to a serine protease, Kᵢ (mol/L) of from 1 E-12 to 1 E-03; more preferred from 1 E-11 to 1 E-04; even more preferred from 1 E-10 to 1 E-05; even more preferred from 1 E-10 to 1 E-06; and most preferred from 1 E-09 to 1 E-07.

The protease inhibitor may be boronic acid or a derivative thereof; preferably, phenylboronic acid or a derivative thereof.

In an embodiment of the invention, the phenyl boronic acid derivative is of the following formula: 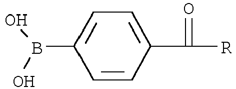 wherein R is selected from the group consisting of hydrogen, hydroxy, C₁-C₆ alkyl, substituted C₁-C₆ alkyl, C₁-C₆ alkenyl and substituted C₁-C₆ alkenyl. Preferably, R is hydrogen, CH₃, CH₃CH₂ or CH₃CH₂CH₂.

In a preferred embodiment, the protease inhibitor (phenyl boronic acid derivative) is 4-formyl-phenyl-boronic acid (4-FPBA).

In another particular embodiment, the protease inhibitor is selected from the group consisting of:
thiophene-2 boronic acid, thiophene-3 boronic acid, acetamidophenyl boronic acid, benzofuran-2 boronic acid, naphtalene-1 boronic acid, naphtalene-2 boronic acid, 2-FPBA, 3-FBPA, 4-FPBA, 1-thianthrene boronic acid, 4-dibenzofuran boronic acid, 5-methylthiophene-2 boronic, acid, thionaphtrene boronic acid, furan-2 boronic acid, furan-3 boronic acid, 4,4 biphenyl-diborinic acid, 6-hydroxy-2-naphtalene, 4-(methylthio) phenyl boronic acid, 4 (trimethylsilyl)phenyl boronic acid, 3-bromothiophene boronic acid, 4-methylthiophene boronic acid, 2-naphtyl boronic acid, 5-bromothiphene boronic acid, 5-chlorothiophene boronic acid, dimethylthiophene boronic acid, 2-bromophenyl boronic acid, 3-chlorophenyl boronic acid, 3-methoxy-2-thiophene, p-methyl-phenylethyl boronic acid, 2-thianthrene boronic acid, dibenzothiophene boronic acid, 4-carboxyphenyl boronic acid, 9-anthryl boronic acid, 3,5 dichlorophenyl boronic, acid, diphenyl boronic acidanhydride, o-chlorophenyl boronic acid, p-chlorophenyl boronic acid, m-bromophenyl boronic acid, p-bromophenyl boronic acid, p-flourophenyl boronic acid, p-tolyl boronic acid, o-tolyl boronic acid, octyl boronic acid, 1,3,5 trimethylphenyl boronic acid, 3-chloro-4-flourophenyl boronic acid, 3-aminophenyl boronic acid, 3,5-bis-(triflouromethyl) phenyl boronic acid, 2,4 dichlorophenyl boronic acid, 4-methoxyphenyl boronic acid.

Further boronic acid derivatives suitable as protease inhibitors in the detergent composition are described in US 4,963,655, US 5,159,060, WO 95/12655, WO 95/29223, WO 92/19707, WO 94/04653, WO 94/04654, US 5442100, US 5488157 and US 5472628.

The protease inhibitor may also be a peptide aldehyde having the formula X-B¹-B⁰-H, wherein the groups have the following meaning:
a) H is hydrogen;
b) B⁰ is a single amino acid residue with L- or D-configuration and with the formula: NH-CHR'-CO;
c) B¹ is a single amino acid residue; and
d) X consists of one or more amino acid residues (preferably one or two), optionally comprising an N-terminal protection group.

NH-CHR'-CO (B°) is an L or D-amino acid residue, where R' may be an aliphatic or aromatic side chain, *e*.*g*., aralkyl, such as benzyl, where R' may be optionally substituted. More particularly, the B° residue may be bulky, neutral, polar, hydrophobic and/or aromatic. Examples are the D- or L-form of Tyr (*p*-tyrosine), *m*-tyrosine, 3,4-dihydroxyphenylalanine, Phe, Val, Met, norvaline (Nva), Leu, Ile or norleucine (Nle).

In the above formula, X-B¹-B⁰-H, the B¹ residue may particularly be small, aliphatic, hydrophobic and/or neutral. Examples are alanine (Ala), cysteine (Cys), glycine (Gly), proline (Pro), serine (Ser), threonine (Thr), valine (Val), norvaline (Nva) and norleucine (Nle), particularly alanine, glycine, or valine.

X may in particular be one or two amino acid residues with an optional N-terminal protection group (i.e. the compound is a tri- or tetrapeptide aldehyde with or without a protection group). Thus, X may be B², B³-B², Z-B², or Z-B³-B² where B³ and B² each represents one amino acid residue, and Z is an N-terminal protection group. The B² residue may in particular be small, aliphatic and/or neutral, *e*.*g*., Ala, Gly, Thr, Arg, Leu, Phe or Val. The B³ residue may in particular be bulky, hydrophobic, neutral and/or aromatic, *e*.*g*., Phe, Tyr, Trp, Phenylglycine, Leu, Val, Nva, Nle or Ile.

The N-terminal protection group Z (if present) may be selected from formyl, acetyl, benzoyl, trifluoroacetyl, fluoromethoxy carbonyl, methoxysuccinyl, aromatic and aliphatic urethane protecting groups, benzyloxycarbonyl (Cbz), t-butyloxycarbonyl, adamantyloxycarbonyl, p-methoxybenzyl carbonyl (MOZ), benzyl (Bn), p-methoxybenzyl (PMB) or p-methoxyphenyl (PMP), methoxycarbonyl (Moc); methoxyacetyl (Mac); methyl carbamate or a methylamino carbonyl/methyl urea group. In the case of a tripeptide aldehyde with a protection group (i.e. X = Z-B²), Z is preferably a small aliphatic group, *e*.*g*., formyl, acetyl, fluoromethoxy carbonyl, t-butyloxycarbonyl, methoxycarbonyl (Moc); methoxyacetyl (Mac); methyl carbamate or a Methylamino carbonyl/methyl urea group. In the case of a tripeptide aldehyde with a protection group (i.e. X = Z-B³-B²), Z is preferably a bulky aromatic group such as benzoyl, benzyloxycarbonyl, p-methoxybenzyl carbonyl (MOZ), benzyl (Bn), p-methoxybenzyl (PMB) or p-methoxyphenyl (PMP).

Suitable peptide aldehydes are described in WO 94/04651, WO 95/25791, WO 98/13458, WO 98/13459, WO 98/13460, WO 98/13461, WO 98/13461, WO 98/13462, WO 2007/141736, 2007/145963, WO 2009/118375, WO 2010/055052 and WO 2011/036153. More particularly, the peptide aldehyde may be Cbz-RAY-H, Ac-GAY-H, Cbz-GAY-H, Cbz-GAL-H, Cbz-VAL-H, Cbz-GAF-H, Cbz-GAV-H, Cbz-GGY-H, Cbz-GGF-H, Cbz-RVY-H, Cbz-LVY-H, Ac-LGAY-H, Ac-FGAY-H, Ac-YGAY-H, Ac-FGAL-H, Ac-FGAF-H, Ac-FGVY-H, Ac-FGAM-H, Ac-WLVY-H, MeO-CO-VAL-H, MeNCO-VAL-H, MeO-CO-FGAL-H, MeO-CO-FGAF-H, MeSO₂-FGAL-H, MeSO₂-VAL-H, PhCH₂O(OH)(O)P-VAL-H, EtSO₂-FGAL-H, PhCH₂SO₂-VAL-H, PhCH₂O(OH)(O)P-LAL-H, PhCH₂O(OH)(O)P-FAL-H, or MeO(OH)(O)P-LGAL-H. Here, Cbz is benzyloxycarbonyl, Me is methyl, Et is ethyl, Ac is acetyl, H is hydrogen, and the other letters represent amino acid residues denoted by standard single letter notification (*e*.*g*., F = Phe, Y = Tyr, L = Leu).

Alternatively, the peptide aldehyde may have the formula as described in WO 2011/036153:
P-O-(Aᵢ-X')ₙ-Aₙ₊₁-Q
wherein Q is hydrogen, CH₃, CX"₃, CHX"₂, or CH₂X", wherein X" is a halogen atom;
wherein one X' is the "double N-capping group" CO, CO-CO, CS, CS-CS or CS-CO, most preferred urido (CO), and the other X' are nothing,
wherein n = 1-10, preferably 2-5, most preferably 2,
wherein each of Aᵢ and Aₙ₊₁ is an amino acid residue having the structure:
-NH-CR"-CO- for a residue to the right of X' = -CO-, or
-CO-CR"-NH- for a residue to the left of X' = -CO-
wherein R" is H- or an optionally substituted alkyl or alkylaryl group which may optionally include a hetero atom and may optionally be linked to the N atom, and
wherein P is hydrogen or any C-terminal protection group.
Examples of such peptide aldehydes include α-MAPI, β-MAPI, F-urea-RVY-H, F-urea-GGY-H, F-urea-GAF-H, F-urea-GAY-H, F-urea-GAL-H, F-urea-GA-Nva-H, F-urea-GA-Nle-H, Y-urea-RVY-H, Y-urea-GAY-H, F-CS-RVF-H, F-CS-RVY-H, F-CS-GAY-H, Antipain, GE20372A, GE20372B, Chymostatin A, Chymostatin B, and Chymostatin C. Further examples of peptide aldehydes are disclosed in WO 2010/055052 and WO 2009/118375, WO 94/04651, WO 98/13459, WO 98/13461, WO 98/13462, WO 2007/145963.

Alternatively to a peptide aldehyde, the protease inhibitor may be a hydrosulfite adduct having the formula X-B¹-NH-CHR-CHOH-SO₃M, wherein X, B¹ and R are defined as above, and M is H or an alkali metal, preferably Na or K.

The peptide aldehyde may be converted into a water-soluble hydrosulfite adduct by reaction with sodium bisulfite, as described in textbooks, *e*.*g*., March, J. Advanced Organic Chemistry, fourth edition, Wiley-Interscience, US 1992, p 895.

An aqueous solution of the bisulfite adduct may be prepared by reacting the corresponding peptide aldehyde with an aqueous solution of sodium bisulfite (sodium hydrogen sulfite, NaHSOs); potassium bisulfite (KHSO₃) by known methods, *e*.*g*., as described in WO 98/47523; US 6,500,802; US 5,436,229; J. Am. Chem. Soc. (1978) 100, 1228; Org. Synth., Coll. vol. 7: 361.

The molar ratio of the above-mentioned peptide aldehydes (or hydrosulfite adducts) to the protease may be at least 1:1 or 1.5:1, and it may be less than 1000:1, more preferred less than 500:1, even more preferred from 100:1 to 2:1 or from 20:1 to 2:1, or most preferred, the molar ratio is from 10:1 to 2:1.

Formate salts (*e*.*g*., sodium formate) and formic acid have also shown good effects as inhibitor of protease activity. Formate can be used synergistically with the above-mentioned protease inhibitors, as shown in WO 2013/004635. The formate salts may be present in the detergent composition in an amount of at least 0.1% w/w or 0.5% w/w, e.g., at least 1.0%, at least 1.2% or at least 1.5%. The amount of the salt is typically below 5% w/w, below 4% or below 3%.

In an embodiment, the protease is a metalloprotease and the inhibitor is a metalloprotease inhibitor, *e.g.,* a protein hydrolysate based inhibitor (*e*.*g*., as described in WO 2008/134343).

### Adjunct materials

Any detergent components known in the art for use in laundry detergents may also be utilized. Other optional detergent components include anti-corrosion agents, anti-shrink agents, anti-soil redeposition agents, anti-wrinkling agents, bactericides, binders, corrosion inhibitors, disintegrants/disintegration agents, dyes, enzyme stabilizers (including boric acid, borates, CMC, and/or polyols such as propylene glycol), fabric conditioners including clays, fillers/processing aids, fluorescent whitening agents/optical brighteners, foam boosters, foam (suds) regulators, perfumes, soil-suspending agents, softeners, suds suppressors, tarnish inhibitors, and wicking agents, either alone or in combination. Any ingredient known in the art for use in laundry detergents may be utilized. The choice of such ingredients is well within the skill of the artisan.

Dispersants - The detergent compositions of the present invention can also contain dispersants. In particular powdered detergents may comprise dispersants. Suitable water-soluble organic materials include the homo- or co-polymeric acids or their salts, in which the polycarboxylic acid comprises at least two carboxyl radicals separated from each other by not more than two carbon atoms. Suitable dispersants are for example described in Powdered Detergents, Surfactant science series volume 71, Marcel Dekker, Inc.

Dye Transfer inhibiting Agents - The detergent compositions of the present invention may also include one or more dye transfer inhibiting agents. Suitable polymeric dye transfer inhibiting agents include, but are not limited to, polyvinylpyrrolidone polymers, polyamine *N-*oxide polymers, copolymers of *N*-vinylpyrrolidone and *N*-vinylimidazole, polyvinyloxazolidones and polyvinylimidazoles or mixtures thereof. When present in a subject composition, the dye transfer inhibiting agents may be present at levels from about 0.0001 % to about 10%, from about 0.01% to about 5% or even from about 0.1% to about 3% by weight of the composition.

Fluorescent whitening agent - The detergent compositions of the present invention will preferably also contain additional components that may tint articles being cleaned, such as fluorescent whitening agent or optical brighteners. Where present the brightener is preferably at a level of about 0.01% to about 0.5%. Any fluorescent whitening agent suitable for use in a laundry detergent composition may be used in the composition of the present invention. The most commonly used fluorescent whitening agents are those belonging to the classes of diaminostilbene-sulfonic acid derivatives, diarylpyrazoline derivatives and bisphenyl-distyryl derivatives. Examples of the diaminostilbene-sulfonic acid derivative type of fluorescent whitening agents include the sodium salts of: 4,4'-bis-(2-diethanolamino-4-anilino-s-triazin-6-ylamino) stilbene-2,2'-disulfonate, 4,4'-bis-(2,4-dianilino-s-triazin-6-ylamino) stilbene-2.2'-disulfonate, 4,4'-bis-(2-anilino-4-(*N*-methyl-*N*-2-hydroxy-ethylamino)-s-triazin-6-ylamino) stilbene-2,2'-disulfonate, 4,4'-bis-(4-phenyl-1,2,3-triazol-2-yl)stilbene-2,2'-disulfonate and sodium 5-(2*H*-naphtho[1,2-*d*][1,2,3]triazol-2-yl)-2-[(*E*)-2-phenylvinyl]benzenesulfonate. Preferred fluorescent whitening agents are Tinopal DMS and Tinopal CBS available from Ciba-Geigy AG, Basel, Switzerland. Tinopal DMS is the disodium salt of 4,4'-bis-(2-morpholino-4-anilino-s-triazin-6-ylamino) stilbene-2,2'-disulfonate. Tinopal CBS is the disodium salt of 2,2'-bis-(phenyl-styryl)-disulfonate. Also preferred are fluorescent whitening agents is the commercially available Parawhite KX, supplied by Paramount Minerals and Chemicals, Mumbai, India. Other fluorescers suitable for use in the invention include the 1-3-diaryl pyrazolines and the 7-alkylaminocoumarins.

Suitable fluorescent brightener levels include lower levels of from about 0.01, from 0.05, from about 0.1 or even from about 0.2 wt % to upper levels of 0.5 or even 0.75 wt%.

Soil release polymers - The detergent compositions of the present invention may also include one or more soil release polymers which aid the removal of soils from fabrics such as cotton and polyester based fabrics, in particular the removal of hydrophobic soils from polyester based fabrics. The soil release polymers may for example be nonionic or anionic terephthalte based polymers, polyvinyl caprolactam and related copolymers, vinyl graft copolymers, polyester polyamides see for example Chapter 7 in Powdered Detergents, Surfactant science series volume 71, Marcel Dekker, Inc. Another type of soil release polymers are amphiphilic alkoxylated grease cleaning polymers comprising a core structure and a plurality of alkoxylate groups attached to that core structure. The core structure may comprise a polyalkylenimine structure or a polyalkanolamine structure as described in detail in WO 2009/087523 (hereby incorporated by reference). Furthermore, random graft co-polymers are suitable soil release polymers. Suitable graft co-polymers are described in more detail in WO 2007/138054, WO 2006/108856 and WO 2006/113314. Other soil release polymers are substituted polysaccharide structures especially substituted cellulosic structures such as modified cellulose deriviatives such as those described in EP 1867808 or WO 2003/040279. Suitable cellulosic polymers include cellulose, cellulose ethers, cellulose esters, cellulose amides and mixtures thereof. Suitable cellulosic polymers include anionically modified cellulose, nonionically modified cellulose, cationically modified cellulose, zwitterionically modified cellulose, and mixtures thereof. Suitable cellulosic polymers include methyl cellulose, carboxy methyl cellulose, ethyl cellulose, hydroxyl ethyl cellulose, hydroxyl propyl methyl cellulose, ester carboxy methyl cellulose, and mixtures thereof.

Anti-redeposition agents - The detergent compositions of the present invention may also include one or more anti-redeposition agents such as carboxymethylcellulose (CMC), polyvinyl alcohol (PVA), polyvinylpyrrolidone (PVP), polyoxyethylene and/or polyethyleneglycol (PEG), homopolymers of acrylic acid, copolymers of acrylic acid and maleic acid, and ethoxylated polyethyleneimines. The cellulose based polymers described under soil release polymers above may also function as anti-redeposition agents.

Rheology Modifiers are structurants or thickeners, as distinct from viscosity reducing agents. The rheology modifiers are selected from the group consisting of non-polymeric crystalline, hydroxy-functional materials, polymeric rheology modifiers which impart shear thinning characteristics to the aqueous liquid matrix of the composition. The rheology and viscosity of the detergent can be modified and adjusted by methods known in the art, for example as shown in EP 2169040.

Other suitable adjunct materials include, but are not limited to, anti-shrink agents, anti-wrinkling agents, bactericides, binders, carriers, dyes, enzyme stabilizers, fabric softeners, fillers, foam regulators, hydrotropes, perfumes, pigments, sod suppressors, solvents, and structurants for liquid detergents and/or structure elasticizing agents.

### Bleaching Systems

Due to the incompatibility of the components there are still only few examples of liquid detergents combining bleach and enzymes (e.g., US 5,275,753 or WO 99/00478). The enzyme microcapsules described in this invention can be used to physically separate bleach from enzyme in liquid detergents. The detergent may contain 0-50% of a bleaching system. Any bleaching system known in the art for use in laundry detergents may be utilized. Suitable bleaching system components include bleaching catalysts, photobleaches, bleach activators, sources of hydrogen peroxide such as sodium percarbonate and sodium perborates, preformed peracids and mixtures thereof. Suitable preformed peracids include, but are not limited to, peroxycarboxylic acids and salts, percarbonic acids and salts, perimidic acids and salts, peroxymonosulfuric acids and salts, for example, Oxone (R), and mixtures thereof. Non-limiting examples of bleaching systems include peroxide-based bleaching systems, which may comprise, for example, an inorganic salt, including alkali metal salts such as sodium salts of perborate (usually mono- or tetra-hydrate), percarbonate, persulfate, perphosphate, persilicate salts, in combination with a peracid-forming bleach activator. The term bleach activator is meant herein as a compound which reacts with peroxygen bleach like hydrogen peroxide to form a peracid. The peracid thus formed constitutes the activated bleach. Suitable bleach activators to be used herein include those belonging to the class of esters amides, imides or anhydrides. Suitable examples are tetracetylethylene diamine (TAED), sodium 4-[(3,5,5-trimethylhexanoyl)oxy]benzene sulfonate (ISONOBS), diperoxy dodecanoic acid, 4-(dodecanoyloxy)benzenesulfonate (LOBS), 4-(decanoyloxy)benzenesulfonate, 4-(decanoyloxy)benzoate (DOBS), 4-(nonanoyloxy)-benzenesulfonate (NOBS), and/or those disclosed in WO 98/17767. A particular family of bleach activators of interest was disclosed in EP624154 and particulary preferred in that family is acetyl triethyl citrate (ATC). ATC or a short chain triglyceride like triacetin has the advantage that it is environmental friendly as it eventually degrades into citric acid and alcohol. Furthermore, acetyl triethyl citrate and triacetin has a good hydrolytical stability in the product upon storage and it is an efficient bleach activator. Finally, ATC provides a good building capacity to the laundry additive. Alternatively, the bleaching system may comprise peroxyacids of, for example, the amide, imide, or sulfone type. The bleaching system may also comprise peracids such as 6-(phthalimido)peroxyhexanoic acid (PAP). The bleaching system may also include a bleach catalyst. In some embodiments, the bleach component may be an organic catalyst selected from the group consisting of organic catalysts having the following formulae:
(i) 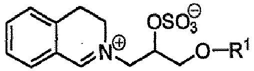
(ii) 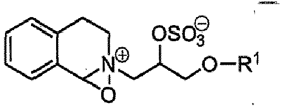
and mixtures thereof; wherein each R¹ is independently a branched alkyl group containing from 9 to 24 carbons or linear alkyl group containing from 11 to 24 carbons, preferably each R¹ is independently a branched alkyl group containing from 9 to 18 carbons or linear alkyl group containing from 11 to 18 carbons, more preferably each R¹ is independently selected from the group consisting of 2-propylheptyl, 2-butyloctyl, 2-pentylnonyl, 2-hexyldecyl, n-dodecyl, n-tetradecyl, n-hexadecyl, n-octadecyl, iso-nonyl, iso-decyl, iso-tridecyl and iso-pentadecyl. Other exemplary bleaching systems are described, e.g., in WO 2007/087258, WO 2007/087244, WO 2007/087259 and WO 2007/087242. Suitable photobleaches may for example be sulfonated zinc phthalocyanine.

### Formulation of detergent products

The liquid detergent composition of the invention may be in any convenient form, e.g., a pouch having one or more compartments, a gel, or a regular, compact or concentrated liquid detergent (see e.g., WO 2009/098660 or WO 2010/141301).

Pouches can be configured as single or multi compartments. It can be of any form, shape and material which is suitable for holding the composition, e.g., without allowing release of the composition from the pouch prior to water contact. The pouch is made from water-soluble film which encloses an inner volume. Said inner volume can be divided into compartments of the pouch. Preferred films are polymeric materials preferably polymers which are formed into a film or sheet. Preferred polymers, copolymers or derivates thereof are selected polyacrylates, and water-soluble acrylate copolymers, methyl cellulose, carboxy methyl cellulose, sodium dextrin, ethyl cellulose, hydroxyethyl cellulose, hydroxypropyl methyl cellulose, maltodextrin, poly methacrylates, most preferably polyvinyl alcohol copolymers and, hydroxypropyl methyl cellulose (HPMC). Preferably the level of polymer in the film for example PVA is at least about 60%. Preferred average molecular weight will typically be about 20,000 to about 150,000. Films can also be of blended compositions comprising hydrolytically degradable and water-soluble polymer blends such as polylactide and polyvinyl alcohol (known under the Trade reference M8630 as sold by MonoSol LLC, Indiana, USA) plus plasticizers like glycerol, ethylene glycerol, propylene glycol, sorbitol and mixtures thereof. The pouches can comprise a solid laundry cleaning composition or part components and/or a liquid cleaning composition or part components separated by the water-soluble film. The compartment for liquid components can be different in composition than compartments containing solids.

Detergent ingredients can be separated physically from each other by compartments in water dissolvable pouches. Thereby negative storage interaction between components can be avoided. Different dissolution profiles of each of the compartments can also give rise to delayed dissolution of selected components in the wash solution.

### EXAMPLES

Chemicals used as buffers and substrates were commercial products of at least reagent grade. Lipase 1 has the amino acid sequence shown in SEQ ID NO: 1 (also described in WO 2014/184164).

A commercially-available, enzyme-free liquid detergent for laundry, "Persil Small and Mighty Non-biological", was purchased in the United Kingdom in June 2014. This detergent is referred to as "Detergent A".

### EXAMPLE 1

### Improved enzyme stability upon microencapsulation with chitosan oligomers

An aqueous phase solution was prepared by dissolving chitosan oligomers into an aqueous solution of Lipase 1 (134 mg active enzyme per gram). The chitosan oligomers were obtained by enzymatic hydrolysis of chitosan (see properties in Table 2).

**Table 1. Experimental setup.**

| **Components in aqueous phase** | **Amount** |
|---|---|
| Lipase 1 solution, 134 mg/g | 98 g |
| Chitosan hydrolysate powder | 11.2 g |
| 4N NaOH | Up to pH 12 |
| Water | Up to 140 g |

**Table 2. Properties of the chitosan enzymatic hydrolysate.**

| **Sample** | **Degree of deacetylation** | **Average MW (w/w)** | **Composition*** |
|---|---|---|---|
| chitosan oligomers | ≥98% | ≤ 3000Da | (GlcN)₂, (GlcN)₃, (GlcN)₂ + GIcNAc, (GlcN)₄, (GlcN)₃ + GIcNAc, (GlcN)₅, (GlcN)₄ + GIcNAc, (GlcN)₆, (GlcN)₅ + GlcNAc, (GlcN)₆ + GlcNAc |

* The table lists here only the types but not the respective amount of chitosan-derived amino sugar oligomers as detected by MALDI-TOF under standard analysis conditions. The list is thought not to be fully representative of the comprehensive composition of the oligomers in the hydrolysate.

An oil phase was prepared by mixing 470 ml of a paraffinic oil (Whiteway 2 supplied by Statoil) with 30 g of a 20% solution of high-MW hydrolyzed copolymer of styrene, stearyl methacrylate and maleic anhydride terpolymer emulsifier in paraffinic oil by stirring (see WO 99/01534, Example 5).

Six water-in-oil emulsions were prepared by mixing 20 ml aqueous phase with 50 ml oil phase under stirring.

A reactant oil phase was prepared by dissolving 10 g of isophthaloyl chloride (Sigma Aldrich) into 90 g paraffinic oil and heating to 85°C with continuous stirring for 1h.

To each of the water-in-oil emulsions, a specific amount of lukewarm reactant oil phase was added to initiate the interfacial polymerization reaction and capsule formation. The reactions were allowed to complete for 1 hour with stirring. Table 3 summarizes the respective experimental conditions for the 6 capsules productions.

**Table 3. Experimental conditions for capsules production.**

| **Capsule samples** | **Emulsion speed** | **Amount of reactant oil** |
|---|---|---|
| Capsule slurry #1 | 1000 rpm | 3 g |
| Capsule slurry #2 | | 4 g |
| Capsule slurry #3 | | 5 g |
| Capsule slurry #4 | 1300 rpm | 3 g |
| Capsule slurry #5 | | 4 g |
| Capsule slurry #6 | | 5 g |

The size of the chitosan oligomers microcapsules in slurries 1-3 and 4-6 were between 164-250 µm and 100-112 µm, respectively, when measured with a Mastersizer 3000 laser diffraction particle size analyzer (Malvern).

The enzymatic stability of the encapsulated enzyme was examined as follows. 1.4 g of each capsule slurries were mixed with 150 g Detergent A. A reference was prepared by mixing 0.27 g of the Lipase 1 solution (134 mg active enzyme per gram) with 150 g Detergent A with magnetic stirring. Reference and capsule batches were split into closed vials with approximately 7 g in each and stored at -18°C and 37°C for 1 week. After storage, the activity was measured by using standard enzyme analytical methods (hydrolysis of p-nitrophenyl palmitate at 37°C, pH 8.0) after an initial 1:100 dilution in demineralized water to facilitate release of enzyme from the capsules. Residual activities were calculated relative to the samples stored at -18°C. A small standard deviation of below ± 5% is generally seen in this assay. The results are shown in Table 4.

**Table 4. Activity loss of the encapsulated lipase after storage in laundry detergent.**

| **Components** | **Activity Loss** |
|---|---|
| Capsule slurry #1 | 31% |
| Capsule slurry #2 | 23% |
| Capsule slurry #3 | 21% |
| Capsule slurry #4 | 18% |
| Capsule slurry #5 | 17% |
| Capsule slurry #6 | 19% |
| Non-encapsulated enzyme | 45% |

The rate of enzyme release from chitosan microcapsules was examined using the standard enzyme analytical method described here above. The start material is first incubated as 1% w/w into deionized water then individual samples are collected through 0.22 µm filters at defined time points up to 15 min. The end point was defined as full release (or 100%) and was used as reference for calculations.

In a parallel experiment, capsule slurries incubated in Detergent A for 1 week at 30°C were also tested in the release rate assay. The results are shown in Table 5.

The rate of enzyme release is defined as the residual lipase activity found in the reaction as a function of time, and compared with a maximum obtainable activity after 15 min incubation.

**Table 5. Rate of enzyme release from chitosan microcapsules.**

| **Sampling Time** | **Rate of release of enzyme activity** | | | | | | | |
|---|---|---|---|---|---|---|---|---|
| | **Capsules slurries *per se*** | | **Capsule slurries stored in laundry detergent** | | | | | |
| | **#1** | **#4** | **#1** | **#2** | **#3** | **#4** | **#5** | **#6** |
| 3 min | 102% | 102% | 104% | 99% | 104% | 99% | 97% | 98% |
| 6 min | 101% | 104% | 102% | 100% | 96% | 99% | 104% | 101% |
| 10 min | 101% | 101% | 100% | 103% | 102% | 99% | 102% | 103% |
| 15 min | 100% | 100% | 100% | 100% | 100% | 100% | 100% | 100% |

### Interpretation of results and conclusions

Our results demonstrate that enzymes can be encapsulated by means of chitosan oligomers cross-linking in order to improve their enzymatic stability in laundry detergent. The rate of enzyme release from the chitosan oligomers microcapsules is fast and identical whether the microcapsules were incubated or not in laundry detergent, suggesting that the detergent does not alter the physical properties of the microcapsules.

### EXAMPLE 2

### Chemical crosslinking of chitosan oligomers

The ability to carry out a chemical cross-linking reaction of chitosan oligomers during the microencapsulation process was studied in a two-phase system under controlled conditions. The reactions are taking place without agitation and without establishing first a water-in-oil emulsion (see Example 1).

A chitosan oligomers solution was prepared by enzymatic hydrolysis as follows: commercial low molecular weight (LMW) chitosan powder (Sigma Aldrich) was dissolved in 1M acetic acid as a 10% w/w solution. pH of the solution was adjusted to 5-6 using 4N NaOH. The solution was then incubated in presence of an experimental bacterial chitosanase at 55°C for ca. 30 h with stirring. After 30 h incubation, the hydrolysate was kept at 5°C and then used as is, or after pH adjustment to pH 12 with 4N NaOH.

In parallel, 1000 Da chitosan oligosaccharides powder (from Kraeber GmbH) was dissolved in 1M acetic acid pH 3.5 as a 5% w/w solution. A portion of this solution was adjusted to pH 12 with 4N NaOH.

As a control, LMW chitosan powder (Sigma Aldrich) was dissolved into a 2% w/w solution with 1M acetic acid. The pH of the LMW chitosan solution was either kept as is, or adjusted to pH 6.2 and > pH 11 using 4N NaOH. The alkaline pH of the LWM chitosan solution could not be determined accurately with a pH electrode because the solution turned into a thick, white gel; pH strips (Merck GmbH) were used for indicative pH determination.

Chemical cross-linking experiments were executed as follows: 20 g of the chitosan solutions (hydrolysate, oligosaccharides and control; pH as is, or adjusted to pH 12) were poured into individual containers. An identical amount of paraffinic oil (Whiteway2 provided by Statoil) was poured gently on top of the aqueous phases. The containers were let to set for 2-5 min in order to yield a homogenous and smooth oil-water interface. A reactant oil containing 10% w/w isophthaloyl chloride (Sigma Aldrich) in paraffinic oil (see Example 1), was added to the top oil phase with gentle mixing and avoiding any disturbance of the oil-water interface. The reaction was let to complete for up to 2 h at room temperature. The observations are summarized in Table 6.

**Table 6. Observations during the chemical cross-liking experiments.**

| **Sample description** | **pH*** | **Observations** |
|---|---|---|
| **A.** Chitosan Hydrolysate | 4.9 | A very thin, transparent and plastic-like film appears at the oil-water interface after at least 30 min reaction time. Disruption of the film with a pipette tip suggests that its mechanical properties are very weak. |
| **B.** Chitosan Hydrolysate | 12 | Immediate film formation (within less than 20 sec). The film appears thicker than for sample A and is translucid/white. The film repairs itself immediately upon disruption with a pipette tip. |
| **C.** Chitosan Oligosaccharides | 3.5 | No film formation visible for up to 2h. |
| **D.** Chitosan Oligosaccharides | 12 | Immediate film formation (within 10-30sec). The film appears thick and is translucid/white. |
| | | The film appears thicker than for sample A. The film repairs itself immediately upon disruption with a pipette tip. |
| **E.** LMW chitosan solution (control) | 3.4 | No film formation visible for up to 2h. |
| **F.** LMW chitosan solution (control) | >11 | The chitosan solution turned into a gel as soon as pH was above -6.5-7. It is not possible to evaluate if a film has formed. |

| | | |
|---|---|---|
| * pH in the aqueous phase, measured at room temperature. | | |

Formation of films of crossed-linked chitosan enzymatic hydrolysate (or chitosan oligomers) and chitosan oligosaccharides seems most successful under alkaline conditions. Film formation appears possible at pH 4.9 for the chitosan hydrolysate but the reaction seems kinetically unfavorable and the film formed thereby shows weak mechanical properties. Cross-linking of chitosan oligosaccharides at pH 3.5 was not observed. The chemical cross-linking reaction under alkaline conditions gives near- immediate, strong film formation. The controls with LWM chitosan demonstrate that this substrate is not suited for created films by chemical cross-linking at low or high pH.

The film formed by the pH 12 chitosan hydrolysate had a similar aspect as the film made by the pH 12 chitosan oligosaccharides (data not shown). MALDI-TOF analyses suggest that the composition of the oligosaccharides and hydrolysate are identical, at least within the same window of detection (data not shown). It is possible that larger chitosan molecules are still present in either samples but those cannot be detected by MALDI-TOF due to intrinsic limitations of the method.

### Conclusion

Chitosan oligomers seem the most preferable type of amino sugar substrates for the microencapsulation of enzymes.

### EXAMPLE 3

### Chemical crosslinking of chitosan oligomers with different cross-linkers

The efficiency of different chemical cross-linkers to cross-link chitosan oligomers was examined in microencapsulation experiments in the laboratory under controlled conditions. In a nearly-identical experimental setup as described in Example 1, two acid halides were tested as chemical cross-linkers instead of isophthaloyl chloride. The cross-linkers tested were adipoyl chloride (Sigma Aldrich, named ADPC here below) and diglycolyl chloride (Sigma Aldrich, named DGC here below).

Practically, emulsions were prepared as follows: 30 grams of aqueous phase (identical to Example 1) were mixed into 70g of oil phase (identical to Example 1); a total of 6 emulsions were produced accordingly. The emulsions speed was set to 1000rpm.

In parallel, three individual reactant oil phases were then prepared by dissolving 10g of cross-linkers into 90g paraffinic oil and heating to 50°C.

To each emulsion, a specific amount of lukewarm reactant oil phase was added to initiate the interfacial polymerization reaction and capsule formation. The reactions were allowed to complete for 30-60min at room temperature and with stirring. Table 1 summarizes the respective experimental conditions for the cross-linking step of the microencapsulation process.

**Table 1. Experimental conditions**

| **Sample** | **Amount and type of chemical cross-linker** |
|---|---|
| 1 | 1.5% w/w DGC |
| 2 | 2.0% w/w DGC |
| 3 | 2.5% w/w DGC |
| 4 | 3.0% w/w DGC |
| 5 | 2.0% w/w ADPC |
| 6 | 4.0% w/w ADPC |

Visual observations of the 6 different microencapsulation reactions under a microscope demonstrated that both chemical cross-linkers, DGC and ADPC, promoted the formation of spherical entities with film-like structures situated at the water-oil interface in the emulsions. The film-like structures were similar in aspect to the ones obtained when using isophthaloyl chloride as cross-linker.

Conclusion: Adipoyl chloride and diglycolyl chloride, like isophthaloyl chloride, are efficient chemical cross-linkers for the cross-linking of chitosan oligomers.

## Claims

1. A microcapsule composition, comprising a detergent enzyme entrapped in an aqueous compartment formed by a membrane, which membrane surrounds the compartment and is made by cross-linking of chitosan oligomers having a weight average molecular weight (M_{w}) of 300 to 15000 Daltons;
wherein the detergent enzyme is selected from the group consisting of protease, metalloprotease, subtilisin, amylase, lipase, cutinase, cellulase, mannanase, pectinase, xanthanase, DNase, laccase, peroxidase, haloperoxidase, perhydrolase, and combinations thereof; preferably the enzyme is a lipase.

2. The composition of claim 1, wherein the compartment contains at least 1% active enzyme by weight of the total compartment.

3. The composition of claim 1 or 2, wherein the diameter of the compartment is at least 50 micrometers.

4. The composition of any of claims 1 to 3, which further includes an alcohol, such as a polyol.

5. The composition of any of claims 1 to 4, wherein the chitosan oligomers comprise at least 60% w/w of chitosan monomers.

6. The composition of any of claims 1 to 5, wherein the chitosan oligomers comprise at least 60% w/w of glucosamine monomers.

7. The composition of any of claims 1 to 6, wherein the chitosan oligomers are composed of randomly distributed β(1→4)-linked glucosamine and N-acetyl-glucosamine.

8. The composition of any of claims 1 to 7, wherein the chitosan oligomers have a weight average molecular weight (M_{w}) of 300 to 5000 Daltons.

9. The composition of any of claims 1 to 8, wherein the membrane is produced by using an acid halide as crosslinking agent.

10. The composition of any of claims 1 to 9, wherein the membrane is produced by interfacial polymerization.

11. Use of the microcapsule composition of any of claims 1 to 10 for stabilizing an enzyme in a liquid detergent composition.

12. A liquid detergent composition or a water-soluble unit dose article surrounded by a water-soluble film, comprising an anionic or non-ionic surfactant, and/or a detergent builder, and the microcapsule composition of any of claims 1 to 10.

13. The composition of claim 12, which comprises at least two mutually incompatible or reactive components, wherein one of the components is entrapped in the compartment of a microcapsule, and the other component is not entrapped in the compartment of a microcapsule.

## Patentansprüche

1. Mikrokapselzusammensetzung, umfassend ein Detergensenzym, das in einem wässrigen Kompartiment eingeschlossen ist, das durch eine Membran gebildet ist, welche Membran das Kompartiment umgibt und durch Vernetzen von Chitosanoligomeren mit einem gewichtsgemittelten Molekulargewicht (M_{w}) von 300 bis 15000 Dalton hergestellt ist;
wobei das Detergensenzym aus der Gruppe bestehend aus Protease, Metalloprotease, Subtilisin, Amylase, Lipase, Cutinase, Cellulase, Mannanase, Pectinase, Xanthanase, DNase, Laccase, Peroxidase, Haloperoxidase, Perhydrolase und Kombinationen davon ausgewählt ist; vorzugsweise ist das Enzym eine Lipase.

2. Zusammensetzung nach Anspruch 1, wobei das Kompartiment mindestens 1% aktives Enzym bezogen auf das Gewicht des gesamten Kompartiments enthält.

3. Zusammensetzung nach Anspruch 1 oder 2, wobei der Durchmesser des Kompartiments mindestens 50 Mikrometer beträgt.

4. Zusammensetzung nach einem beliebigen der Ansprüche 1 bis 3, die des Weiteren einen Alkohol wie ein Polyol einschließt.

5. Zusammensetzung nach einem beliebigen der Ansprüche 1 bis 4, wobei die Chitosanoligomere mindestens 60% Gew./Gew. an Chitosanmonomeren umfassen.

6. Zusammensetzung nach einem beliebigen der Ansprüche 1 bis 5, wobei die Chitosanoligomere mindestens 60% Gew./Gew. an Glucosaminmonomeren umfassen.

7. Zusammensetzung nach einem beliebigen der Ansprüche 1 bis 6, wobei die Chitosanoligomere aus zufällig verteiltem β(1→4)-verknüpftem Glucosamin und N-Acetyl-Glucosamin aufgebaut sind.

8. Zusammensetzung nach einem beliebigen der Ansprüche 1 bis 7, wobei die Chitosanoligomere ein gewichtsgemitteltes Molekulargewicht (M_{w}) von 300 bis 5000 Dalton aufweisen.

9. Zusammensetzung nach einem beliebigen der Ansprüche 1 bis 8, wobei die Membran durch Verwenden eines Säurehalogenids als Vernetzungsmittel hergestellt ist.

10. Zusammensetzung nach einem beliebigen der Ansprüche 1 bis 9, wobei die Membran durch Grenzflächenpolymerisation hergestellt ist.

11. Verwendung der Mikrokapselzusammensetzung gemäß einem beliebigen der Ansprüche 1 bis 10 zum Stabilisieren eines Enzyms in einer flüssigen Detergenszusammensetzung.

12. Flüssige Detergenszusammensetzung oder wasserlöslicher Einzeldosisartikel, umgeben von einem wasserlöslichen Film, umfassend ein anionisches oder nichtionisches oberflächenaktives Mittel und/oder einen Detergens-Gerüststoff und die Mikrokapselzusammensetzung gemäß einem beliebigen der Ansprüche 1 bis 10.

13. Zusammensetzung nach Anspruch 12, die mindestens zwei gegenseitig inkompatible oder reaktive Bestandteile umfasst, wobei einer der Bestandteile in dem Kompartiment einer Mikrokapsel eingeschlossen ist und der andere Bestandteil nicht in dem Kompartiment einer Mikrokapsel eingeschlossen ist.

## Revendications

1. Composition de microcapsules, comprenant une enzyme détergente piégée dans un compartiment aqueux formé par une membrane, laquelle membrane entoure les compartiments et est produite par réticulation d'oligomères de chitosane ayant une masse moléculaire moyenne en masse (M_{w}) de 300 à 15 000 Daltons ;
dans laquelle l'enzyme détergente est choisie dans le groupe constitué par une protéase, une métalloprotéase, une subtilisine, une amylase, une lipase, une cutinase, une cellulase, une mannanase, une pectinase, une xanthanase, une DNase, une laccase, une peroxydase, une haloperoxydase, une perhydrolase, et leurs combinaisons ; de préférence l'enzyme est une lipase.

2. Composition selon la revendication 1, dans laquelle le compartiment contient au moins 1 % d'enzyme active en poids du compartiment total.

3. Composition selon la revendication 1 ou 2, dans laquelle le diamètre du compartiment est d'au moins 50 micromètres.

4. Composition selon l'une quelconque des revendications 1 à 3, qui comprend en outre un alcool, tel qu'un polyol.

5. Composition selon l'une quelconque des revendications 1 à 4, dans laquelle les oligomères de chitosane comprennent au moins 60 % p/p de monomères de chitosane.

6. Composition selon l'une quelconque des revendications 1 à 5, dans laquelle les oligomères de chitosane comprennent au moins 60 % p/p de monomères de glucosamine.

7. Composition selon l'une quelconque des revendications 1 à 6, dans laquelle les oligomères de chitosane sont composés de glucosamine à liaison β(1→4) et de N-acétylglucosamine distribuées de façon statistique.

8. Composition selon l'une quelconque des revendications 1 à 7, dans laquelle les oligomères de chitosane ont une masse moléculaire moyenne en masse (M_{w}) de 300 à 5 000 Daltons.

9. Composition selon l'une quelconque des revendications 1 à 8, dans laquelle la membrane est produite par utilisation d'un halogénure d'acide en tant qu'agent de réticulation.

10. Composition selon l'une quelconque des revendications 1 à 9, dans laquelle la membrane est produite par polymérisation interfaciale.

11. Utilisation de la composition de microcapsules de l'une quelconque des revendications 1 à 10 pour stabiliser une enzyme dans une composition détergente liquide.

12. Composition détergente liquide ou article en dose unitaire soluble dans l'eau entouré d'un film soluble dans l'eau, comprenant un tensioactif anionique ou non-ionique, et/ou un adjuvant de détergent, et la composition de microcapsules de l'une quelconque des revendications 1 à 10.

13. Composition selon la revendication 12, qui comprend au moins deux composants mutuellement incompatibles ou réactifs, dans laquelle l'un des composants est piégé dans le compartiment d'une microcapsule, et l'autre composant n'est pas piégé dans le compartiment d'une microcapsule.
